(19)

Europäisches
Patentamt
European
Patent Office
Office européen
des brevets

(11)    **EP 3 423 950 B1**

(12)    **EUROPEAN PATENT SPECIFICATION**

(45) Date of publication and mention
of the grant of the patent:
**07.08.2019  Bulletin 2019/32**

(21) Application number: **17725809.2**

(22) Date of filing: **09.05.2017**

(51) Int Cl.:
***G06F 13/38*** *(2006.01)*

(86) International application number:
**PCT/US2017/031802**

(87) International publication number:
**WO 2017/196875 (16.11.2017 Gazette 2017/46)**

(54) **DIGITAL SIGNALING SCHEMES FOR LINE MULTIPLEXED UART FLOW CONTROL**

DIGITALSIGNALISIERUNGSSCHEMEN FÜR LEITUNGSGEMULTIPLEXTE
UART-FLUSSSTEUERUNG

SCHÉMAS DE SIGNALISATION NUMÉRIQUE DESTINÉS À UNE COMMANDE DE FLUX D'UART
MULTIPLEXÉ EN LIGNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **10.05.2016  US 201662334141 P
05.05.2017  US 201762502503 P
08.05.2017  US 201715589805**

(43) Date of publication of application:
**09.01.2019  Bulletin 2019/02**

(73) Proprietor: **QUALCOMM INCORPORATED
San Diego, California 92121-1714 (US)**

(72) Inventors:
• **MISHRA, Lalan, Jee
San Diego
California 92121-1714 (US)**
• **WIETFELDT, Richard, Dominic
San Diego
California 92121-1714 (US)**
• **WILEY, George, Alan
San Diego
California 92121-1714 (US)**

(74) Representative: **Tomkins & Co
5 Dartmouth Road
Dublin 6 (IE)**

(56) References cited:
**US-A1- 2013 342 260     US-B1- 7 260 660**

**Description**

**TECHNICAL FIELD**

The present disclosure relates generally to peripheral communications interfaces, and more particularly to integrating interface devices that communicate flow-control signals using reduced pin counts with interface devices that communicate flow-control signals using a pin for each signal.

**BACKGROUND**

Mobile communication devices may include a variety of components including circuit boards, integrated circuit (IC) devices and/or System-on-Chip (SoC) devices. The components may include processing circuits, user interface components, storage and other peripheral components. Communication between components may be implemented using universal asynchronous receiver/transmitter (UART) devices. In many interfaces, 4-wire UART devices transmit data on one wire (Tx wire), receive data on another wire (Rx wire), and use two wires to carry flow-control signals. One flow-control signal is the request-to-send (RTS) signal which may be used to indicate that the UART has data to be transmitted. The other flow-control signal is the clear-to-send (CTS) signal which is received at the UART and may be used to indicate that the UART can transmit data.

Increasing functionality and denser input/output (I/O) configurations can result in a demand for reduced pin-count in interfaces used to interconnect SoC and/or other IC devices. The line-multiplexed universal asynchronous receiver/transmitter (LM-UART) is a UART that uses two wires to carry Rx, Tx, RTS and CTS signals by multiplexing RTS and CTS between data transmissions on the Rx and Tx wires to reduce the number of I/O connections while maintaining the capability to support a hardware-based flow control mechanism in full-duplex modes of operation.

Manufacturers of mobile devices, such as cellular phones, may obtain components of the mobile devices from various sources, including different manufacturers. For example, an application processor in a cellular phone may be obtained from a first manufacturer, while a modem for the cellular phone may be obtained from a second manufacturer. The application processor and the modem or other device may be interconnected using UARTs. Some devices may include LM-UART and support modes of operation using two wires and multiplexed flow-control. Accordingly, there exists an ongoing need to provide improved line drivers and signaling in devices that employ 4-wire UARTs with devices that have LM-UARTs.

US7260660B1 relates to a method of controlling the flow of data through the single-pin interface by communicating exclusively through the single-pin interface.

**SUMMARY**

Certain aspects of the disclosure relate to systems, apparatus, methods and techniques that provide improved signaling reliability between LM-UARTs.

In various aspects of the disclosure, a method performed at a transmitting device includes asserting a stop condition on a wire of a serial data link by driving the wire to a first voltage level for a first period of time that is less than a duration of the stop condition, monitoring the wire after the first period of time, determining that flow-control has been asserted when the wire remains at a second voltage level for a second period of time that exceeds a minimum period of time defined for flow-control pulses, and after the first period of time has elapsed, refraining from transmitting data on the wire while flow-control is asserted, and transmitting data on the wire when flow-control is de-asserted.

In one aspect, the wire is returned to the first voltage level after expiration of the second period of time. In some instances, the method includes determining that flow-control is de-asserted when the wire remains at the second voltage level for a third period of time that begins after the wire has returned to the first voltage level upon expiration of the second period of time, and when the third period of time exceeds the minimum period of time defined for flow-control pulses. In some instances, the method includes calculating a fourth period of time based on duration of the second period of time, and determining that flow-control is de-asserted after the fourth period of time has elapsed.

In one aspect, flow-control is determined to have been asserted when the wire transitions to the second voltage level within the duration of the stop condition. The method may include determining an error condition when a transition of the wire to the second voltage level occurs after the stop condition has been terminated, and driving the wire to the first voltage level when the error condition is determined. The wire may be driven to the first voltage level when the error condition is determined by flipping a keeper circuit.

In one aspect, the method includes overriding flow-control by actively driving the wire after a period corresponding to a transmission time for a datagram has elapsed.

In various aspects of the disclosure, a transmitting apparatus includes a line driver coupled to a wire of a serial data link and configured to transmit a data packet over the wire, and provide a stop condition after transmitting the data packet by driving the wire to a first voltage level for a first period of time that is less than a duration of the stop condition. The transmitting apparatus may include a flow-control circuit configured to monitor the wire after the first period of time has elapsed, determine that flow-control has been asserted when the wire remains at a second voltage level for a second period of time that exceeds a minimum period of time defined for flow-control pulses after the first period of time has elapsed. The line driver may be configured to refrain from transmitting data on the wire while flow-control is asserted, and transmit data on the wire when flow-control is de-asserted.

In one aspect, the wire is returned to the first voltage level after expiration of the second period of time. In some instances, the flow-control circuit is configured to determine that flow-control is de-asserted when the wire remains at the second voltage level for a third period of time that begins after the wire has returned to the first voltage level upon expiration of the second period of time, and when the third period of time exceeds the minimum period of time defined for flow-control pulses. In some instances, the flow-control circuit is configured to calculate a fourth period of time based on duration of the second period of time, and determine that flow-control is de-asserted after the fourth period of time has elapsed. The flow-control circuit may be configured to program a counter to count a number of clock pulses corresponding to the fourth period of time, and determine that flow-control is de-asserted after the counter has counted the number of clock pulses corresponding to the fourth period of time.

In one aspect, flow-control is determined to have been asserted when the wire transitions to the second voltage level within the duration of the stop condition. The flow-control circuit may be configured to determine that an error condition has occurred when a transition of the wire to the second voltage level occurs after the stop condition has been terminated. The flow-control circuit may be configured to drive the wire to the first voltage level when the error condition is determined. The flow-control circuit may be configured to flip a keeper circuit when the error condition is determined.

In one aspect, the apparatus may be configurable to transmit data packets when the serial data link is operated synchronously.

In one aspect, the flow-control circuit is configured to override flow-control by actively driving the wire after a period corresponding to a transmission time for a data byte has elapsed.

In various aspects of the disclosure, a processor-readable storage medium is disclosed. The storage medium may be a non-transitory storage medium and may store code that, when executed by one or more processors, causes the one or more processors to assert a stop condition on a wire of a serial data link by driving the wire to a first voltage level for a first period of time that is less than a duration of the stop condition, monitor the wire after the first period of time, determine that flow-control has been asserted when the wire remains at a second voltage level for a second period of time that exceeds a minimum period of time defined for flow-control pulses, and after the first period of time has elapsed, refrain from transmitting data on the wire while flow-control is asserted, and transmit data on the wire when flow-control is de-asserted.

In various aspects of the disclosure, a method performed at a receiving device includes determining that a stop condition has been asserted on a wire of a serial data link. The stop condition may endure for a first period of time that is initiated when the wire is driven to a first voltage level after data is received from the wire. The method may include asserting flow-control for the serial data link by driving the wire to a second voltage level for a second period of time that exceeds a minimum period of time defined for flow-control pulses, de-asserting the flow-control for the serial data link, including driving the wire to the first voltage level when the second period of time is terminated, and receiving data from the wire after de-asserting the flow-control for the serial data link.

In one aspect, de-asserting the flow-control for the serial data link includes transmitting a pulse on the wire after the second period of time has elapsed. The pulse may have a duration that exceeds a minimum period of time defined for flow-control pulses.

In one aspect, the method includes selecting a third period of time during which the flow-control for the serial data link is to be asserted, and calculating the second period of time based on a duration of the third period of time.

In one aspect, the method includes refraining from asserting flow-control for the serial data link when the first period of time has expired.

In one aspect, the method includes determining that flow-control for the serial data link is not to be asserted, determining an error condition when a transition of the wire to the second voltage level occurs during the first period of time after determining that flow-control for the serial data link is not to be asserted, and driving the wire to the first voltage level when the error condition is determined. Driving the wire to the first voltage level when the error condition is determined may include flipping a keeper circuit.

In various aspects of the disclosure, an apparatus includes means for determining that a stop condition has been asserted on a wire of a serial data link. The stop condition may endure for a first period of time that is initiated when the wire is driven to a first voltage level after data is received from the wire. The apparatus may include means for providing flow-control signaling, where the means for providing flow-control signaling is configured to assert flow-control for the serial data link by driving the wire to a second voltage level for a second period of time that exceeds a minimum period of time defined for flow-control pulses, and de-assert the flow-control for the serial data link, including driving the wire to the first voltage level when the second period of time is terminated. The apparatus may include means for receiving data from the wire after the flow-control is de-asserted for the serial data link.

In one aspect, the means for providing flow-control signaling may be configured to transmit a pulse on the wire after the second period of time has elapsed. The pulse may have a duration that exceeds a minimum period of time defined for flow-control pulses.

In one aspect, the means for providing flow-control signaling may be configured to select a third period of time during which the flow-control for the serial data link is to be asserted, and calculate the second period of time based on a duration of the third period of time.

In one aspect, the means for providing flow-control signaling may be configured to refrain from asserting flow-control for the serial data link when the first period of time has expired.

In one aspect, the apparatus includes means for correcting signaling errors on the serial data link configured to determine that flow-control for the serial data link is not to be asserted, and determine an error condition has occurred when a transition of the wire to the second voltage level occurs during the first period of time after determining that flow-control for the serial data link is not to be asserted. The means for providing flow-control signaling is configured to drive the wire to the first voltage level when occurrence of the error condition is determined. The means for providing flow-control signaling may be configured to flip a keeper circuit when occurrence of the error condition is determined.

In one aspect, the means for receiving data from the wire may be configurable to receive data when the serial data link is operated synchronously.

In various aspects of the disclosure, a processor-readable storage medium is disclosed. The storage medium may be a non-transitory storage medium and may store code that, when executed by one or more processors, causes the one or more processors to determine that a stop condition has been asserted on a wire of a serial data link. The stop condition may endure for a first period of time that is initiated when the wire is driven to a first voltage level after data is received from the wire. The code may cause the one or more processors to assert flow-control for the serial data link by driving the wire to a second voltage level for a second period of time that exceeds a minimum period of time defined for flow-control pulses, de-assert the flow-control for the serial data link by driving the wire to the first voltage level when the second period of time is terminated, and receive data from the wire after de-asserting the flow-control for the serial data link.

## BRIEF DESCRIPTION OF THE DRAWINGS

FIG. 1 illustrates one example of an apparatus that may be adapted according to certain aspects disclosed herein.
FIG. 2 illustrates an example of a serial interface based on a 4-wire high-speed universal asynchronous receiver/transmitter device (HS-UART), and an example of a serial interface based on a 2-wire LM-UART.
FIG. 3 illustrates a single-wire interface in an LM-UART, which may be adapted in accordance with certain aspects disclosed herein.
FIG. 4 illustrates certain electrical characteristics of a connection between LM-UARTs.
FIG. 5 illustrates an example of an apparatus employing keeper circuits.
FIG. 6 illustrates examples of timing of flow-control assertion by a receiving device in accordance with certain aspects disclosed herein.
FIG. 7 illustrates an example of timing associated with forced flow control deassertion by a transmitting device in accordance with certain aspects disclosed herein.
FIG. 8 illustrates a first example of improved signaling between LM-UARTs adapted in accordance with certain aspects disclosed herein.
FIG. 9 illustrates a second example of improved signaling between LM-UARTs adapted in accordance with certain aspects disclosed herein.
FIGs. 10 and 11 illustrate a third example of improved signaling between LM-UARTs adapted in accordance with certain aspects disclosed herein.
FIG. 12 is a block diagram illustrating an example of an apparatus employing a processing circuit that may be adapted according to certain aspects disclosed herein.
FIG. 13 is a flowchart of a first example of method of operating an LM-UART interface in accordance with certain aspects disclosed herein.
FIG. 14 is a flowchart of a second example of method of operating an LM-UART interface in accordance with certain aspects disclosed herein.
FIG. 15 illustrates a first example of a hardware implementation for an apparatus in accordance with certain aspects disclosed herein.
FIG. 16 is a flowchart of a third example of method of operating an LM-UART interface in accordance with certain aspects disclosed herein.

FIG. 17 is a flowchart of a fourth example of method of operating an LM-UART interface in accordance with certain aspects disclosed herein.

FIG. 18 illustrates a second example of a hardware implementation for an apparatus in accordance with certain aspects disclosed herein.

## DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form in order to avoid obscuring such concepts.

Several aspects of the invention will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

### Overview

Devices that include multiple SoC and other IC devices often employ a serial bus to connect processors with modems and other peripherals. In some instances, it may be desirable to implement a 2-wire LM-UART on an application-specific integrated circuit (ASIC) or SoC to minimize pin count assigned to the serial interface. In some instances, line drivers available for use in a 2-wire LM-UART may not have impedance control circuits or capabilities. In these instances, flow-control signaling may be susceptible to noise and other effects that may introduce voltage spikes that can flip circuits that record state of a signal, or that otherwise may be interpreted as a change in flow-control signaling.

According to certain aspects disclosed herein, improved signaling is employed that enables the use of general-purpose drivers to implement LM-UARTs on ASICs and SoCs. Certain aspects of the disclosure relate to digital signaling schemes that improve the reliability of LM-UART flow control implementations. In one aspect, certain techniques are applicable to line drivers that employ digital signaling and that have limited output impedance control. In one aspect, certain flow-control techniques are applicable to line drivers that can drive the line with a nominal output impedance and enter a high impedance mode when not driving the line. In another aspect, error correction techniques may be applied to flow-control signaling implemented using line drivers that have limited output impedance control.

Certain aspects disclosed herein may apply to LM-UARTs that operate asynchronously and/or to LM-UARTs that operate synchronously. LM-UARTs adapted in accordance with certain aspects disclosed herein can be used to implement serial links that reduce the number of pins (general-purpose input/output) by replacing RTS and CTS wires. Accordingly, the 4-pins and/or 4-wires required for a conventional UART may be reduced to a 2-pin and/or 2-wire LM-UART. According to certain aspects, a 2-wire LM-UART may be implemented with hardware flow control, thereby improving link throughput and power consumption with respect to devices that do not support flow control or that use software-based methods of flow control. Software-based methods of flow control may employ XON/XOFF sequences and the like.

### Example Of An Apparatus With A Serial Data Link

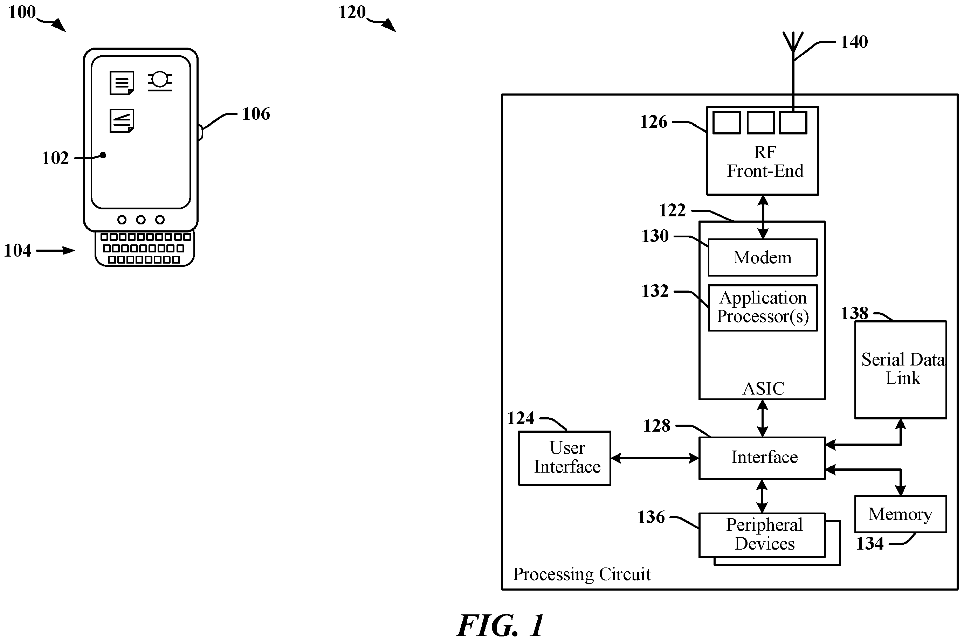

According to certain aspects, a serial data link may be used to interconnect electronic devices that are subcomponents of an apparatus such as a cellular phone, a smart phone, a session initiation protocol (SIP) phone, a laptop, a notebook, a netbook, a smartbook, a personal digital assistant (PDA), a satellite radio, a global positioning system (GPS) device, a smart home device, intelligent lighting, a multimedia device, a video device, a digital audio player (e.g., MP3 player), a camera, a game console, an entertainment device, a vehicle component, a wearable computing device (e.g., a smart watch, a health or fitness tracker, eyewear, etc.), an appliance, a sensor, a security device, a vending machine, a smart meter, a drone, a multicopter, or any other similar functioning device. FIG. 1 depicts an example of such an apparatus 100. The apparatus 100 may include a processing circuit 120 having multiple circuits or devices 122, 124, 126, 128, 134, 136, and/or 138. The processing circuit 120 may be implemented in an ASIC or SoC that may include multiple circuits or devices 122, 124, 126, 128, 134, 136, and/or 138. In one example, the apparatus 100 may be a communication device and the processing circuit 120 may include an RF front-end circuit 126 that enables the apparatus to communicate through one or more antennas 140 with a radio access network, a core access network, the Internet and/or another network.

In the example illustrated in FIG. 1, the processing circuit 120 includes an ASIC device 122 that has one or more processors 132, one or more modems 130, and/or other logic circuits or functions. The processing circuit 120 may be controlled by an operating system and may provide an application programming interface (API) layer that enables the one or more processors 132 to execute software modules residing in the memory device 134, for example. The software modules may include instructions and data stored in a processor readable storage such as the memory device 134. The ASIC device 122 may access its internal memory, the memory device 134 of the processing circuit 120, and/or external memory. Memory may include read-only memory (ROM) or random-access memory (RAM), electrically erasable programmable ROM (EEPROM), flash cards, or any memory device that can be used in processing systems and computing platforms. The processing circuit 120 may include, or have access to a local database or other parameter storage that can maintain operational parameters and other information used to configure and operate the apparatus 100 and/or the processing circuit 120. The local database may be implemented using registers, a database module, flash memory, magnetic media, EEPROM, optical media, tape, soft or hard disk, or the like. The processing circuit 120 may also be operably coupled to external devices such as the antenna 140, a display 102, operator controls, such as a button 106 and/or an integrated or external keypad 104, among other components. A user interface circuit 124 may communicate with the display 102, keypad 104, etc. through a dedicated communication link 138 or through one or more serial data interconnects.

The processing circuit 120 may communicate through one or more interface circuits 128, which may include a combination of circuits, counters, timers, control logic and other configurable circuits or modules. In one example, the interface circuit 128 may be configured to operate in accordance with communication specifications or protocols. The processing circuit 120 may include or control a power management function that configures and manages the interface circuit 128, the user interface circuit 124, the RF front-end circuit 126, and the operation of one or more application processors 132 resident in the ASIC device 122, for example.

## Overview Of The LM-UART

Certain aspects of the LM-UART architecture are implemented in a manner that provides backward compatibility with conventional UARTs. Flow control may be asserted by a receiving device while the transmitting device is sending a stop bit. In some examples, the duration of the stop-bit may be configurable within the range of 1 to 3 bit-periods, with possible half-bit increments. That is, the stop bit may be extended and may have a duration of up to three-bit period. In some instances, the receiving device and transmitting device may be collocated and operated using a clock derived from the same root clock source, and a 1-bit stop-bit can ensure reliable flow control operation. A transmitting device may override or pre-empt the flow control asserted by the receiving device. For example, the transmitting device may drive the line high for a minimum number of over-sampling clock cycles (e.g., 3 clock cycles). In one implementation, the transmitting device may override or pre-empt the flow control after waiting for at least 1 data-frame time interval. In some instances, the receiving device may additionally or alternatively use software-based flow-control.

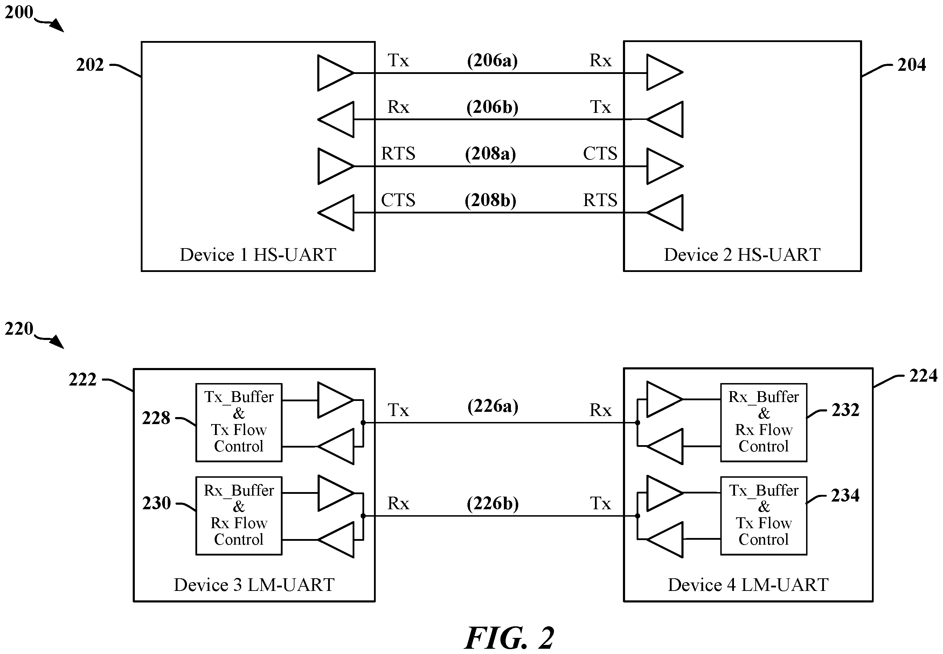

FIG. 2 illustrates an example 200 of a serial interface that employs a conventional, 4-wire UART device and an example 220 of a serial interface that use a 2-wire LM-UART device. In the first example 200, two 4-wire HS-UARTs 202, 204 implement a full-duplex link with hardware flow-control over four wires 206a, 206b, 208a, 208b. Data is transmitted over two wires 206a and 206b. For example, data is transmitted by the first HS-UART 202 over a first wire 206a and received by the first HS-UART 202 from a second wire 206b. Data is received by the second HS-UART 204 from the first wire 206a and the second HS-UART 204 may transmit data over the second wire 206b. The first HS-UART 202 transmits its RTS signal over a third wire 208a to the CTS input of the second HS-UART 204. The CTS signal received by the first HS-UART 202 from a fourth wire 208b is transmitted as the RTS signal of the second HS-UART 204.

In one mode of operation, each HS-UART 202, 204 transmits a frame only when an active signaling state is detected on the CTS signal (e.g. the CTS is at logic high level). The receiving HS-UART 204, 202 side asserts its RTS signal when it is ready to receive a new frame. RTS/CTS flow control may be managed by buffer control logic in each HS-UART 202, 204. The buffer control logic may be adapted to detect occupancy levels of transmit or receive buffers and, for example, an RTS signal may be asserted in accordance with the occupancy levels. The first HS-UART 202 may selectively control transmissions by the second HS-UART 204 using the RTS signal sent over the third wire 208a. The first HS-UART 202 may be selectively inhibited from transmitting data by the second HS-UART 204 using the RTS signal sent over the fourth wire 208b, which is received as CTS at the first HS-UART 202.

In the second example 220 illustrated in FIG. 2, two high-speed universal asynchronous receiver/transmitter devices (LM-UARTs 222, 224) implement a full-duplex serial link using multiplexed hardware flow-control over two wires 226a, 226b. Data is transmitted in packets over the two wires 226a and 226b, with data packets transmitted from the Tx output of the first LM-UART 222 being carried over a first wire 226a to the Rx input of the second LM-UART 224. Data packets received at the Rx input of the first LM-UART 222 are transmitted over the second wire 206b through the Tx output of the second LM-UART 224. Flow control information is transmitted between data packets on both wires 226a, 226b. In each LM-UART 222 or 224, integrated transmit data buffering and flow control logic 228 or 234 may transmit data and receive flow control information (CTS) using a single wire 226a or 226b, while integrated receive data buffering and flow control logic 230 or 232 may receive data and transmit flow control information (RTS) over a single wire 226b or 226a.

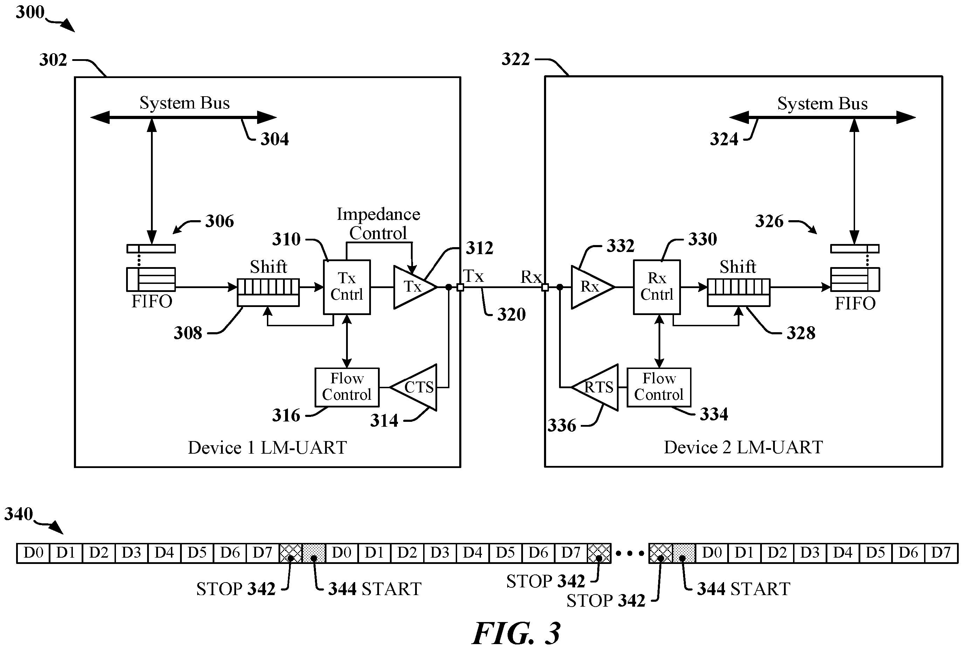

FIG. 3 illustrates a single-wire interface 300, which may be part of, or contribute to a full-duplex 2-wire serial data link. The single-wire interface 300 may be implemented using two LM-UARTs 302, 322. A transmitter circuit of the first LM-UART 302 is coupled to a receiver circuit of a second LM-UART 322 through a single wire 320. The data flow diagram 340 illustrates an example of packet transmission on the wire 320.

The first LM-UART 302 includes a line driver 312 used to transmit data packets over the wire 320. The output of the line driver may be in a high-impedance state between data packets while a line receiver 314 coupled to the wire 320 provides a signal that is monitored by flow control logic 316. The flow control logic 316 determines the CTS state of the single-wire interface 300 between data packets. The CTS state is used by transmitter control logic 310 to determine whether the line driver 312 is to be enabled or placed in high-impedance mode, and to control the operation of a parallel-to-serial converter 308 (e.g., a shift circuit or register), and/or to control the operation of data buffers that may include one or more First-In-First-Out memory structures or registers (FIFO 306). Data may be provided to the FIFO 306 through a system bus 304.

The second LM-UART 322 includes a line receiver 332 that receives data packets transmitted over the wire 320 by the first LM-UART 302. The output of the line receiver 332 is provided to a serial-to-parallel converter 328 (e.g., a shift circuit or shift register) under the control of receiver control logic 330. The output of the serial-to-parallel converter 328 may be placed in a FIFO memory structure or register (FIFO 326) for reading through a system bus 324, for example. The receiver control logic 330 may manage flow control logic 334 that is configured to transmit flow control information between data packets. In one example, the receiver control logic 330 may monitor the occupancy of the FIFO 326 and may determine when the FIFO 326 has exceeded a maximum data occupancy threshold. When the maximum data occupancy threshold is exceeded, the receiver control logic 330 may cause flow control logic 334 to assert flow-control by driving the wire 320 between data packets to indicate that RTS is not asserted. In one example, the wire 320 may be driven to a low signaling state between data packets to assert flow-control. Asserting flow-control may be considered to be the equivalent of driving a physical RTS wire to a logic low signaling state. When the maximum data occupancy threshold is not exceeded, the receiver control logic 330 may cause flow control logic 334 to de-assert flow-control to indicate that RTS is asserted. In the example, RTS may be asserted by returning the wire 320 to a high signaling state and/or by refraining from driving the wire 320 between data packets. De-asserting flow-control may be considered to be the equivalent of driving the physical RTS wire to a logic high signaling state.

According to certain aspects, LM-UART flow control may be adapted to take advantage of UART data flow control decision-making that is performed at byte-level boundaries, and which does not occur at intermediate bits within a UART frame. In general, a single data frame consists of 8-data bits delineated by a LOW start-bit and a HIGH stop bit. In some instances, and according to certain UART protocols, parity and checksum bits may be optionally transmitted. The data flow diagram 340 does no show parity and checksum bits.

A receiving LM-UART 322 may indicate whether it is ready to receive a next frame, based on state of the FIFO 326 in the receiving LM-UART 322, for example. Assertion of flow control (indicating not ready to receive) is made during the reception of the stop-bit 342 of the current packet. The stop-bit 342 defines as the window during which hardware flow control assertion is to be made, and in at least some implementations the LM-UART architecture does not permit hardware flow control assertion at any other time. Software flow control may be asserted in accordance with conventional UART protocols.

**Signaling Associated With Line-Multiplexed UARTs**

According to certain aspects, an LM-UART architecture facilitates hardware flow-control signaling by provisioning and configuring standard general purpose input/output (GPIO) pads. In one example, GPIO pads involved in LM-UART signaling may be configured to use keeper circuitry. In another example, GPIO pads involved in LM-UART signaling may be configured to enable dynamic control of an output driver's impedance.

Line driver circuits of LM-UARTs that include impedance control circuits may provide a low-impedance driver circuit when actively transmitting, and high impedance inputs when in receive mode. With reference again to FIG. 3, the line driver 312 in a transmitting LM-UART 302 provides a low impedance output while transmitting data, and a high impedance input after initiating a STOP condition 342 and before a next START condition 344. The high impedance input enables the RTS line driver 336 in the receiving LM-UART 322 to drive the wire 320 to a low logic level that indicates that the transmitting device should refrain from transmitting.

In some instances, undesired conditions can occur due to the use of GPIO devices that do not have impedance control circuits, or when noise affects the signaling state of the wire 320 when both line drivers 312, 336 are in a high-impedance mode. An impedance control method used for flow control that is reliable in normal operating conditions can be affected by process node variability and variabilities introduced through effects of variabilities of process, voltage and temperature (PVT).

Certain aspects of the disclosure relate to digital signaling schemes that improve the reliability of LM-UART flow control implementations. In one aspect, certain techniques are applicable to line drivers that employ a digital signaling approach and which avoid impedance variation in the drivers. In another aspect, certain techniques are applicable to line drivers that can drive the line with a nominal output impedance and enter a high impedance mode when not driving the line.

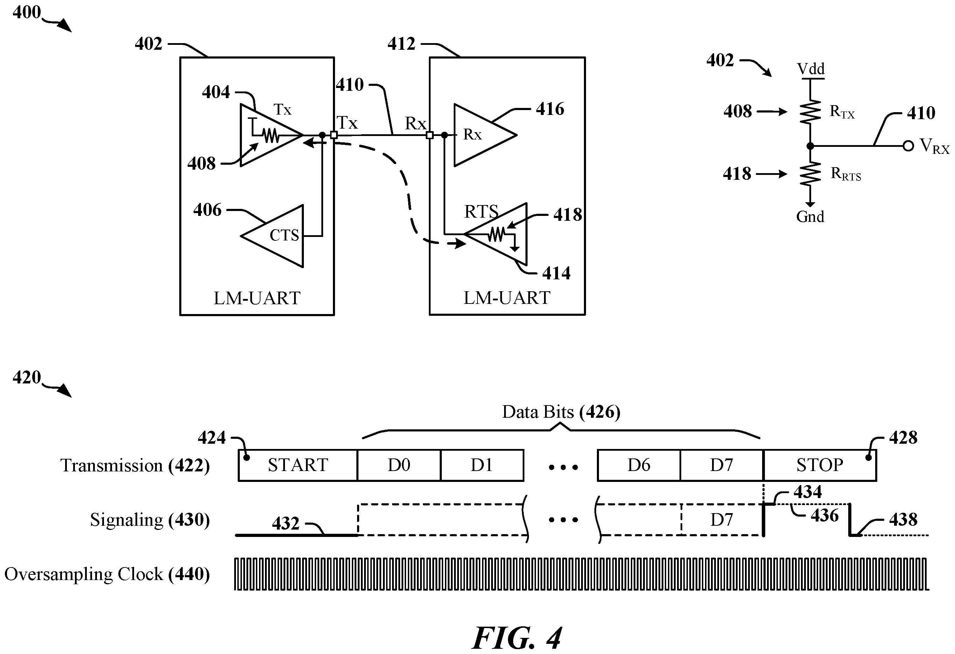

FIG. 4 illustrates operational certain aspects of a configuration 400 of LM-UARTs 402, 412. A line or wire 410 is included in a transmission path that connects the Tx line driver 404 of a transmitting LM-UART 402 and the RTS line driver 414 of a receiving LM-UART 412. The Tx line driver 404 of the transmitting LM-UART 402 presents an output impedance illustrated as a resistor 408 having a value $R_{TX}$. The RTS line driver 414 of the receiving LM-UART 412 presents an output impedance illustrated as a resistor 418 having a value $R_{RTS}$. The voltage $V_{RX}$ observed on the wire 410 (e.g., at the input to the receiving LM-UART 412) is determined by a relationship between the resistors 408, 418 ($R_{TX}$ and $R_{RTS}$). For example, when the resistor 408 of the Tx line driver 404 is coupled to a voltage of $V_{DD}$, the voltage $V_{RX}$ observed at the input to the receiving LM-UART 412 may be calculated as:

$$V_{RX} = \frac{R_{RTS}}{R_{RX} + R_{RTS}} \times V_{DD} \qquad \text{Eq. 1}$$

The timing diagram 420 in FIG. 4 illustrates certain aspects related to signaling 430 on the wire 410 when the transmitting LM-UART 402 is communicating data to a receiving LM-UART 412. In the illustrated example, a transmission 422 sent from the transmitting LM-UART 402 to the receiving LM-UART 412 commences with a start bit (START condition 424), followed by eight data bits 426. The transmission 422 is terminated by a stop bit (STOP condition 428). The Tx line driver 404 of the transmitting LM-UART 402 signals the START condition 424 which may be signaled by driving the wire 410 to a voltage level corresponding to a low logic state 432. The Tx line driver 404 then drives the wire 410 in accordance with the data bits 426 to be transmitted. The Tx line driver 404 then signals the STOP condition 428 by driving the wire 410 to a voltage level corresponding to a high logic state 434. An oversampling clock 440 may be employed by the transmitting LM-UART 402 to control timing of transmissions on the wire 410. Alternatively, or additionally, an oversampling clock 440 may be employed by the receiving LM-UART 412 to sample signals received from the wire 410.

After asserting the high logic state 434 to signal the STOP condition 428, the Tx line driver 404 releases the wire 410, which may then be held in the logic high state 436 by the resistor 408 in the Tx line driver 404. In the example, the wire 410 is driven to a voltage level corresponding to a low logic state 438 by the RTS line driver 414 of the receiving LM-UART 412 before completion of the time interval associated with the STOP condition 428. While the low logic state 438 is asserted, the transmitting LM-UART 402 refrains from transmitting data. When the RTS line driver 414 returns the wire 410 to the high logic state 434, the Tx line driver 404 then begins a next transmission by asserting a low logic state 432 on the wire 410 to signal a START condition.

The LM-UARTs 402, 412 can support flow-control assertion from the receiving LM-UART 412 and flow-control override from the transmitting LM-UART 402 provided the output impedance relationship of the line drivers 404, 414 is maintained within certain ranges. The voltage levels recognized by receivers, including the CTS receiver 406 and the Rx receiver 416, may be represented as $VIO_H$ and $VIO_L$ for logic high ("1") and low ("0") states, respectively. In one example, the following conditions may apply:

1. $V_{RX} \geq VIO_{H\_MIN}$    during transmission of logic "1"
2. $V_{RX} \leq VIO_{L\_MAX}$    during transmission of logic "0"
3. $V_{RX} \leq VIO_{L\_MAX}$    at and during flow-control assertion
4. $V_{RX} \geq VIO_{H\_MIN}$    during flow-control override while transmitting a "1"
5. $V_{RX} \leq VIO_{L\_MAX}$    during flow-control override while transmitting a "0"

In an impedance-controlled line driver, conditions 1-5 can typically be met by design. In some instances, limited impedance control may be available. For example, a GPIO line driver may provide a low impedance while driving the wire 410, and a high-impedance input when the line driver is inactive. When line drivers have limited or no impedance control, conditions 1 and 2 may be met with relative ease, while conditions 3, 4 and 5 may be affected by PVT variations that cause the signal level to fall outside desired regions.

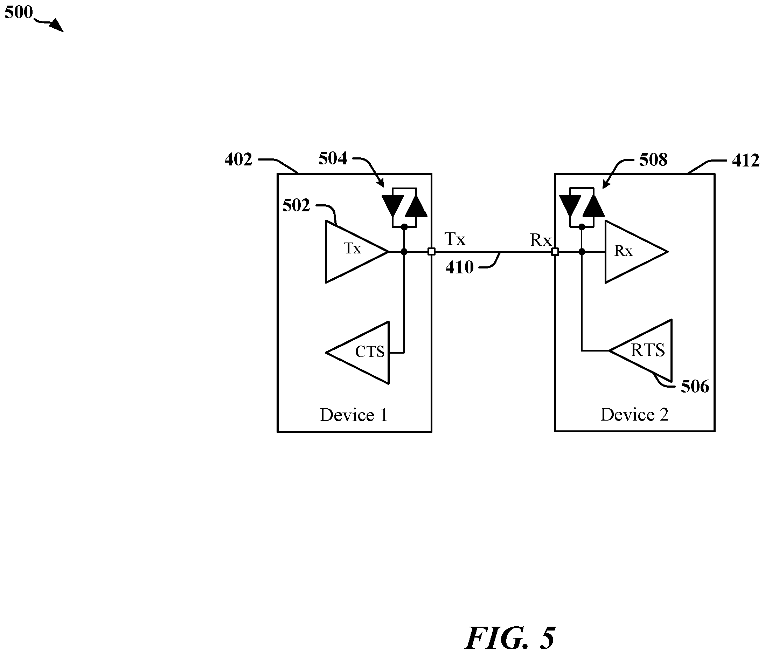

FIG. 5 illustrates an example of an apparatus 500 implementing a keeper-based solution. In the illustrated example, a Tx line driver 502 in a first LM-UART 402 is configured to transmit signals over the wire 410 to a second LM-UART 412, while an RTS line driver 506 in a second LM-UART 412 is configured to assert flow-control signals on the wire 410 between data packets transmitted by the first LM-UART 402. A keeper circuit 504 in the first LM-UART 402 and/or a keeper circuit 508 in the second LM-UART 412 operate to provide a weak pull-up when the line drivers 502 and/or 506 coupled to the wire 410 are inactive. The keeper circuits 504, 508 may be adapted to keep the wire 410 at an idle signaling state (high logic state) or at the flow-control (FC) asserted signaling state (low logic state).

The keeper circuits 504, 508 may keep the line in the idle state after a STOP Condition 428 has been asserted on the wire 410. The STOP Condition 428 may be considered asserted when the Tx line driver 502 operating with nominal output impedance drives a stop bit on the wire 410 for one or more cycles of an oversampling clock 440. The Tx line driver 502 may then release the wire 410 and enter a high impedance state. One or more keeper circuits 504, 508 hold the wire 410 at the signaling state associated with the STOP Condition 428. The receiving LM-UART 412 may assert flow-control by causing the RTS line driver 506 to drive the wire 410 to the low logic state for at least one cycle of the oversampling clock 440. The RTS line driver 506 then ceases driving the line and enters a high-impedance state. The keeper circuits 504 and/or 508 hold the wire 410 at the voltage level associated with the low logic state. The receiving LM-UART 412 may de-assert flow-control by causing the RTS line driver 506 to drive the wire 410 to the high logic state for at least one cycle of the oversampling clock 440. The receiving LM-UART 412 may then cease driving the wire 410 and enter a high-impedance state, leaving the keeper circuits 504 and/or 508 hold the wire 410 at the voltage level associated with the low logic state.

Any active line driver 502 or 506 may overcome the keeper circuits 504 and/or 508. Keeper circuits 504, 508 are configured to follow voltage on the wire, and can be prone to state-flipping caused by electromagnetic interference or other signal noise. For example, a low-energy electromagnetically-induced spike may cause a voltage glitch on the wire 410 that causes the keeper circuits 504, 508 to change state. Flow control dead-lock may result when keeper circuits 504, 508 are flipped by noise. Dead-lock can occur when the keeper circuits 504, 508 assert a low logic state on the wire 410 after a STOP condition 428 has been transmitted. The transmitting LM-UART 402 recognizes the low logic state as a negative clear-to-send indication, while the receiving LM-UART 412 may consider the continuous low logic state to be a break condition that causes reset of certain line interface circuits.

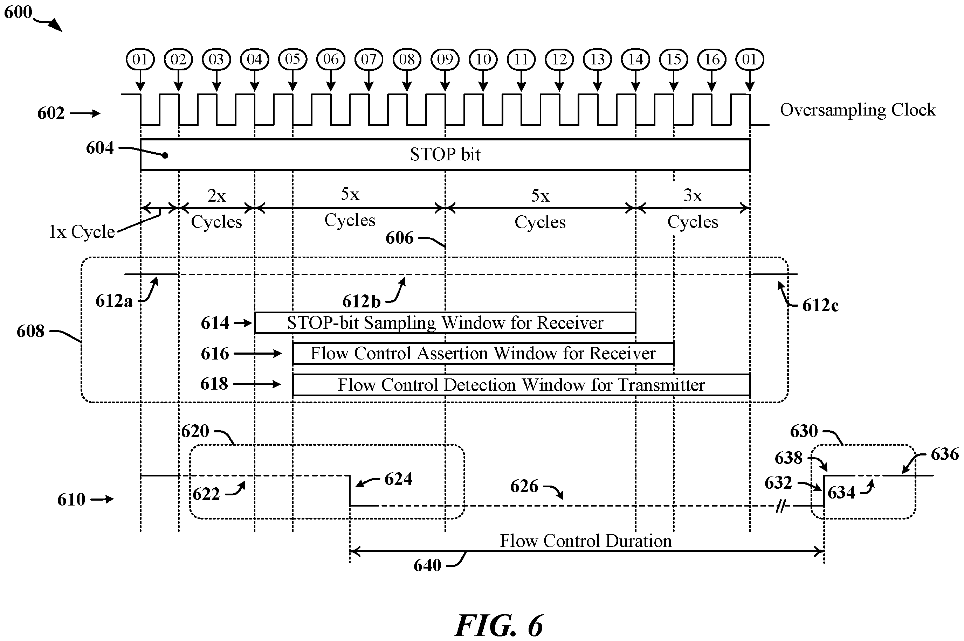

FIG. 6 is a timing diagram 600 that illustrates a first example 608 when no flow-control is asserted, a second example 620 when flow control is asserted, and a third example 630 when flow-control is deasserted. The first example 608 illustrates timing windows 614, 616 and 618 associated with flow-control assertion. During a first cycle of the oversampling clock 602 after a STOP bit 604 is initiated, the line is actively driven 612a by the transmitting LM-UART 402. After the first cycle, the transmitting LM-UART 402 enters high-impedance state 612b, and the signaling state of the line is maintained by a keeper circuit. The transmitting LM-UART 402 actively drives the line after the STOP bit 604 is completed. In one example, the STOP bit 604 may be sampled during a first timing window 614 that may extend over 10 cycles of the oversampling clock 602, centered on the mid-point of the STOP bit 604. Flow control may be asserted by a receiving LM-UART 412 during a second timing window 616 that extends over 10 cycles of the oversampling clock 602 that begins one clock cycle after the first timing window 614. The transmitting LM-UART 402 may monitor the line for flow control assertion during a third timing window 618 that extends over 11 cycles of the oversampling clock 602 commencing at the same time as the second timing window 616.

In the second example 620, a transmitting LM-UART 402 with limited impedance control may launch a stop-bit 604 by actively driving the line 610 to logic-1 for 1-cycle of the oversampling clock 602. After this actively driven period, the transmitting LM-UART 402 can stop driving the line 610 and the line 610 is held at logic-1 by the keepers on both the transmit pin of the transmitting LM-UART 402 and the corresponding receive pin on the receiving LM-UART 412. The keepers maintain the line 610 at logic-1 signaling state for the duration of the stop-bit 604, which may be programmed from 1 to 3 periods of the oversampling clock 602. The transmitting LM-UART 402 may select a duration of the stop bit 604 from a configured set of durations such as the set: {1 bit, 1.5 bits, 2 bits, 2.5 bits, 3 bits}.

The second timing window 616 provides the receiving LM-UART 412 with an opportunity to assert flow control. If the receiving LM-UART 412 requires or desires that flow-control be asserted, then actively drives 624 the line 610 to a logic-0 signaling state for 1-cycle of over-sampling clock period. The receiving LM-UART 412 enters high-impedance mode and the keepers maintain the line 610 at the logic-0 signaling state 626 for the duration of the flow-control. In certain examples, the receiving LM-UART 412 may attempt to assert flow control at the center 606 of the STOP bit 604. Frequency and phase mismatches between the over-sampling clocks used by the transmitting LM-UART 402 and the receiving LM-UART 412 may cause variations in timing with respect to the center 606 of the STOP bit 604. The provision of a prolonged flow-control detection window may accommodate variations in timing.

In some examples, the CTS receiver 406 in the transmitting LM-UART 402 is configured to monitor the signaling state of the line 610 and transitions in signaling state of the line 610. A transition from logic-1 signaling state to logic-0 signaling state during the stop bit 604 (i.e. during the third window 618) may constitute assertion of flow control by the receiving LM-UART 412.

The transmitting LM-UART 402 may have a minimum margin available of on cycle of the oversampling clock 604 for flow-control detection. Flow control detection circuits in the transmitting LM-UART 402 may employ both positive and negative-edge based line state sampling. This may be implemented, for example, using an inverted over-sampling clock.

Flow control may be deasserted by the receiving LM-UART 412 as illustrated in the third timing example 630. The receiving LM-UART 412 may initiate flow control deassertion by driving 632, 638 the line 610 to logic-1 for 1-cycle of the oversampling clock 602. The receiving LM-UART 412 may then enter a high impedance state 634 and the signaling state of the line 610 may be maintained at logic-1 by the keepers on the transmit and receive pins. The transmitting LM-UART 402 may resume actively driving of the line 610 when its CTS receiver 406 detects a transition from logic-0 signaling state to logic-1 signaling state. The transmitting LM-UART 402 may maintain the line 610 at the logic-1 signaling state until data is available in its transmit buffer for transmission.

In normal operation, the receiving LM-UART 412 may gracefully deassert flow control after space is established in the receive buffers of the receiving LM-UART 412. The transmitting LM-UART 402 does not typically actively drive the line 610 involved after flow control assertion when a graceful de-assertion occurs. The transmitting LM-UART 402 waits for the formal deassertion of flow control before it resumes transmission of the next frame. In some instances, the flow control duration 640 may be excessively long due to an error condition on the receiving LM-UART 412. In such instances, the and the transmitting LM-UART 402 may launch a logical break condition. In some instances, the transmitting LM-UART 402 may desire to launch a data frame without waiting for the flow control deassertion.

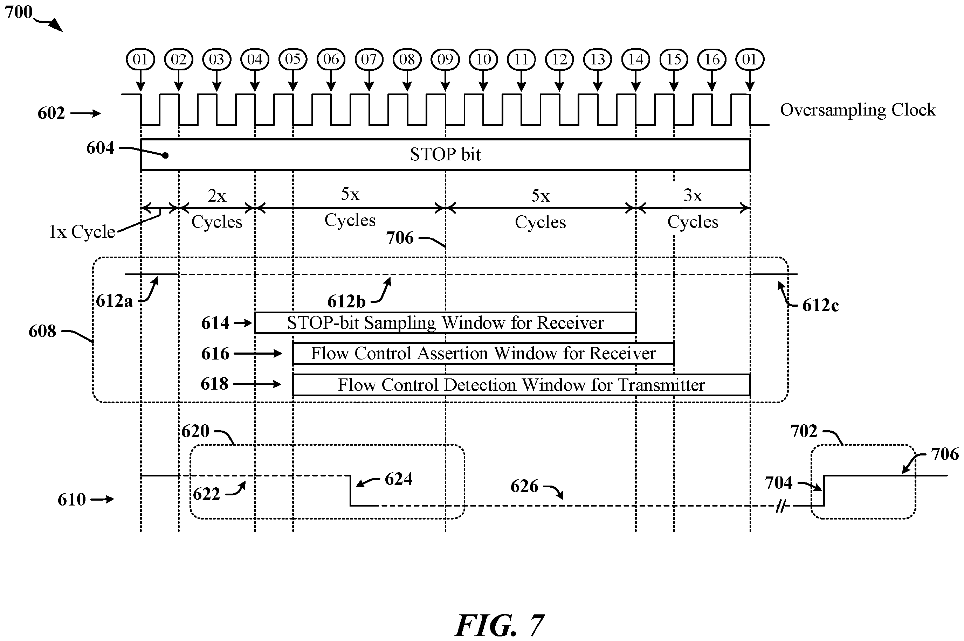

According to certain aspects, the transmitting LM-UART 402 may launch a logical break condition or force flow control deassertion. FIG. 7 illustrates an example of timing 702 when the transmitting LM-UART 402 forces flow control deassertion. FIG. 7 includes the same timing for assertion and non-assertion of flow control as illustrated in FIG. 6. Forced flow control deassertion may be performed by the transmitting LM-UART 402 when as the line 610 is held at is held at the logic-0 signaling state 626 by keepers, which may be easily overridden when the transmitting LM-UART 402 resumes active drive mode.

When flow control assertion is detected in the second example 608, the transmitting LM-UART 402 refrains from transmission of the next packet. In one example, the transmitting LM-UART 402 may override flow-control under software control after waiting for a period corresponding to one or more datagram time-spans. The transmitting LM-UART 402 overrides a flow control condition by actively driving the line 610 to a logic-1 signaling state and then maintaining the logic-1 signaling state for a minimum period of time. In one example, the minimum period of time is 3 cycles of the oversampling clock 602. The transmitting LM-UART 402 may launch a new data packet after maintaining the logic-1 signaling state for the minimum period of time to ensure that the receiving LM-UART 412 has sufficient and/or necessary turn-around time to resume receive operations. The transmitting LM-UART 402 may employ a timer circuit or software element to measure elapsed time intervals associated with flow control assertions.

The behavior of the receiving LM-UART 412 during transmit override may be similar to behavior of a conventional UART under similar conditions. The transmitted data may be accommodated in the receive buffer if there is available space. Otherwise, data corruption due to data override can result. The receiving LM-UART 412 responds to a break-condition transmission in a manner similar to that of a conventional UART.

According to certain aspects, the duration of the STOP bit 60 may be selected to accommodate flow control circuit implementations. A one-bit STOP bit may be deemed sufficient for flow control assertion purposes in some implementations but may be insufficient based on design constraints or requirements. When a STOP bit 604 has a duration greater than one bit (i.e., one data bit duration), the number of cycles of the oversampling clock 602 used to determine timing windows 614, 616, 618 and/or flow control signaling may vary. For example, the 16 clock cycles illustrated in FIGs. 6 and 7 may be proportionally multiplied, should the stop-bit duration be programmed to 2 or 3 bit-period. When the duration of the STOP bit 604 has been chosen to be equal to a 2 bit-period, stop-bit sampling from the perspective of the receiving LM-UART 412 may occur at the mid-point of the first bit. Thus, the entire second bit of the STOP bit 604 provides an elongated window 618 for flow control logic implementation. In many implementations, single-bit STOP bits 604 may be employed to maximize throughput. The duration of STOP bits 604 may be programmable to accommodate logic and propagation delays associated with flow-control signaling.

Noise can affect keeper-based implementations to a greater extent than other implementations. In some instances, a transmitting LM-UART 402 can be configured to actively drive the STOP bit 604 for a full bit-period and use a second bit-period provided after transmission of the STOP bit for flow-control signaling.

## Improved Signaling For Line-Multiplexed UARTs

According to certain aspects disclosed herein, an LM-UART may be adapted to support improved, reliable flow control signaling when the LM-UART does not have impedance controlled line drivers. LM-UARTs adapted according to one or more aspects can operate without keeper circuits or multi-level (more than 2 levels) output impedance control while ensuring flow-control operation over all anticipated PVT conditions.

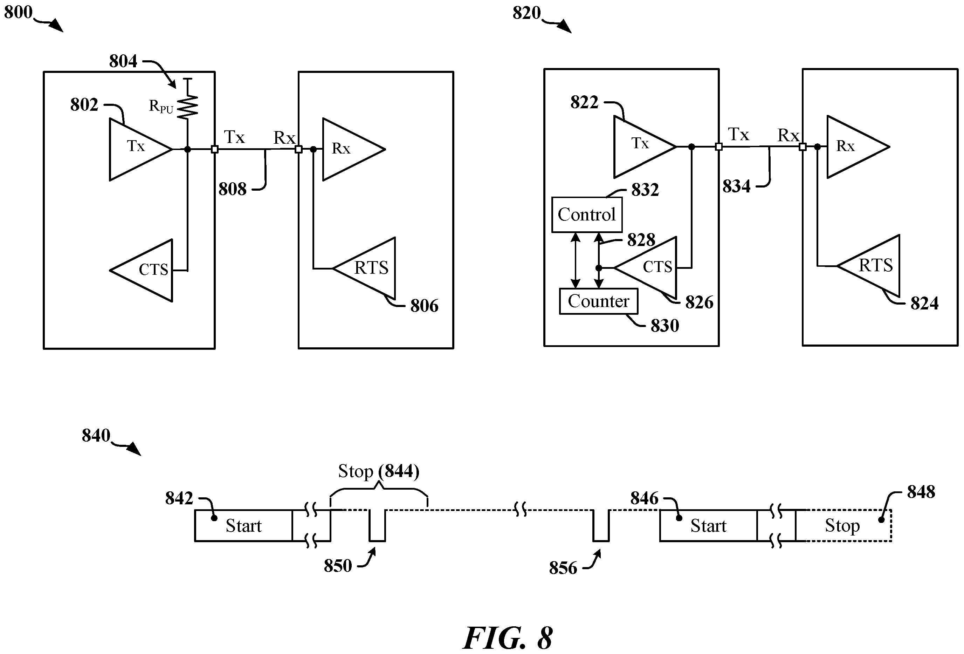

FIG. 8 illustrates a first example of improved signaling 840 for LM-UART configurations 800, 820. The illustrated signaling 840 may be employed with an LM-UART configuration 800 in which a pull-up resistor 804 is used to maintain a high voltage level on the wire 808 when the line drivers 802, 806 are inactive and present a high-impedance to the wire 808. The illustrated signaling 840 may also be employed with an LM-UART configuration 820 which include internal circuits that provide a nominal (low) output impedance while active and a higher impedance when inactive in order to maintain the high voltage level on the wire 834 when the line drivers 822, 826 are inactive.

In this example, flow-control is implemented by transmitting a first flow-control ($FC_{ON}$) pulse 850 to signal that the receiver is not ready, and a second flow-control ($FC_{OFF}$) pulse 856 to signal that the receiver has become ready. The pulses 850, 856 may have a programmable duration. In certain implementations, the pulses 850, 856 may be programmed to have a duration measured in half-bit intervals. Pulse detection techniques may be implemented to avoid false triggering due to noise. In one example, the pulses 850, 856 may be detected using central zone sampling. In another example, the pulses 850, 856 may be detected using multi-point sampling with voting logic to avoid false trigger due to noise.

An LM-UART may be adapted to detect pulses 850, 856 and to measure the duration of detected pulses 850, 856. For example, the LM-UART may include one or more counters 830 and logic circuits, provided in a control module 832 to measure pulse widths, determine validity of pulses and implement flow control in accordance with the pulses 850, 856. The duration of a pulse 850, 856 can provide additional information. In some instances, the first flow-control pulse 850 may have a different duration than the second flow-control pulse 856.

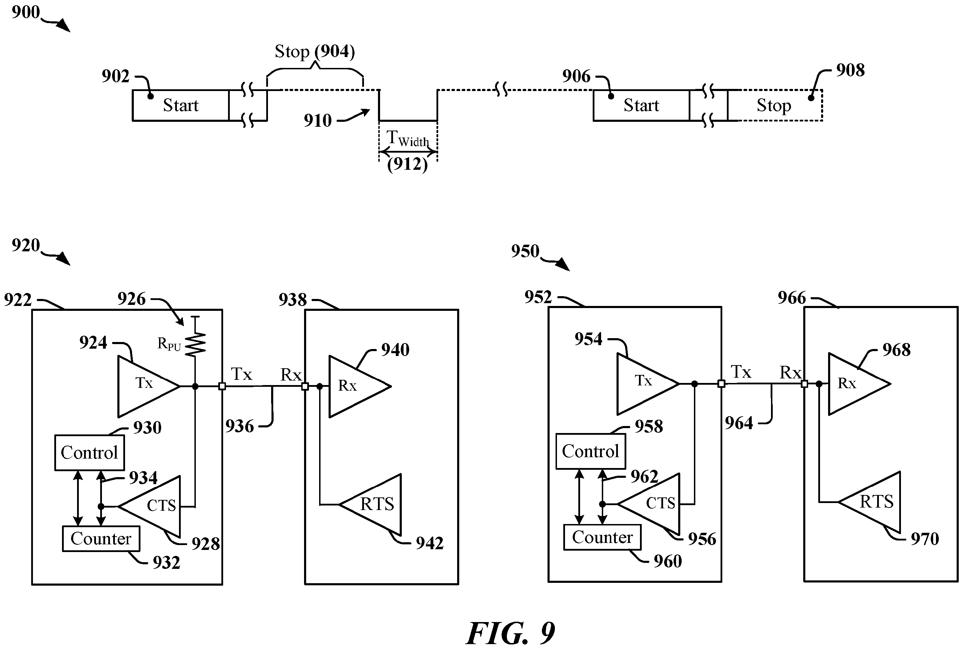

FIG. 9 illustrates an example of improved signaling 900 that can enable reliable flow-control signaling between LM-UARTs that are implemented using line drivers with limited impedance control. The illustrated signaling 900 may be employed with an LM-UART interface configuration 920 in which a pull-up resistor 926 is used to maintain a high voltage level on the wire 936 when line drivers 924, 942 are inactive and present a high-impedance to the wire 936. The illustrated signaling 900 may also be employed with an LM-UART configuration 950 which includes line drivers 954, 970 with limited internal impedance control that provides a nominal (low) output impedance while active and a higher impedance when inactive in order to maintain the high voltage level on the wire 964 when the line drivers 954, 970 are inactive.

According to certain aspects disclosed herein, flow-control can be implemented using a variable length flow-control ($FC_{ON}$) pulse 910 to signal that a receiver 938, 966 is not ready for a period of time that corresponds to the duration ($T_{width}$ 912) of the $FC_{ON}$ pulse 910. In one example, control logic 930, 958 in the transmitter 922, 952 initiates a counter 932, 960 which measures the duration of the elapsed time indicated by the width of the $FC_{ON}$ pulse 910. Transmission may resume when the counter 932, 960 expires or reaches a configured count value. In one example, the counter 932, 960 may be configured by loading a value calculated based on the duration of the $FC_{ON}$ pulse 910 as counted using an oversampling clock 440 (see FIG. 4) or another clock signal. In another example, the counter 932, 960 may be configured by loading a value selected from a lookup table using an index derived from the duration or estimated duration of the $FC_{ON}$ pulse 910. At the receiver, the duration of the flow control period is already known and the RTS-based counter mechanism may not be needed for receiver operation.

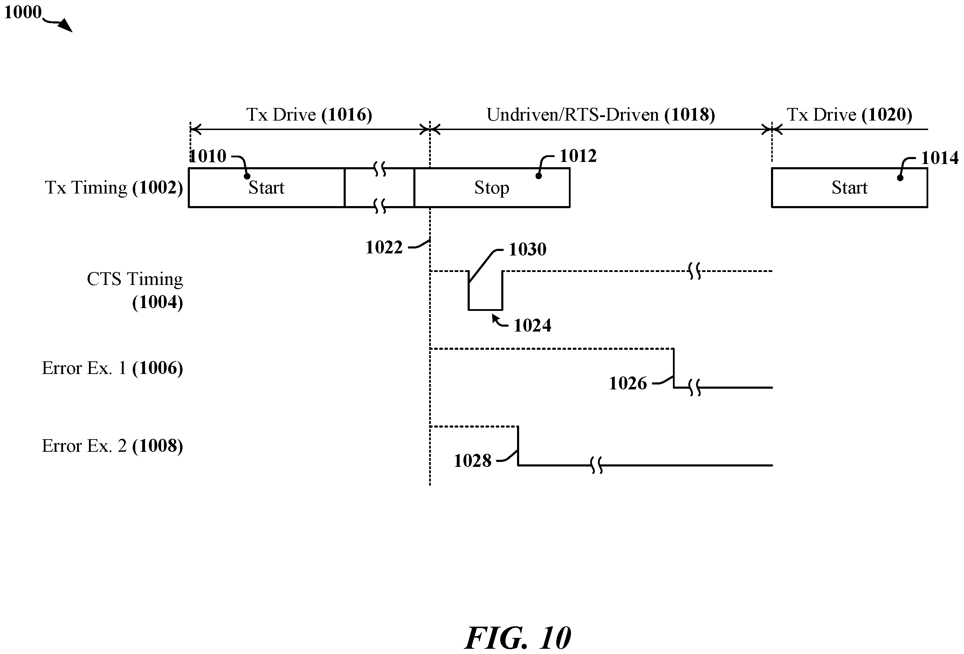

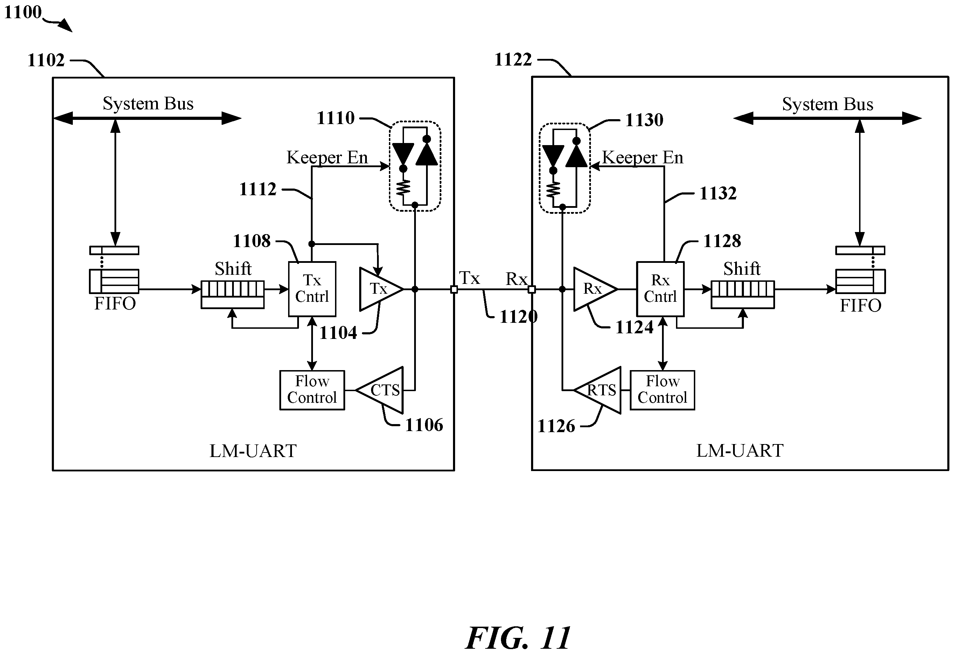

FIGs. 10 and 11 illustrate an example of improved signaling for LM-UARTs that provides error detection for flow-control signaling. FIG. 10 is a timing diagram 1000 that illustrates the transmitter timing 1002, error-free CTS timing 1004 and two examples of signaling errors 1006, 1008 that may be caused when a keeper circuit is used in an LM-UART implementation. Keeper circuits can be susceptible to noise that cause spikes at the input to the keeper circuits.

The timing illustrated as CTS timing 1004 may correspond to conventional LM-UART flow-control timing or to the pulse-based flow-control implementations illustrated in FIGs 8 and 9. Flow-control may be asserted by driving a logic low pulse 1024 on the signal wire coupling a transmitting LM-UART and a receiving LM-UART. The logic low pulse 1024 indicates that the receiver is not ready to receive data and may have a variable duration to convey additional information. The logic low pulse 1024 may have a known minimum duration when it is the first pulse ($FC_{ON}$ pulse) transmitted after a STOP condition 1012 is first asserted. For example, the logic low pulse 1024 may have a duration sufficient to flip a keeper circuit. Signaling errors 1006, 1008 may be caused by noise that flips a keeper circuit to a state that does not reflect the flow control status of the link between LM-UARTs. A first category of signaling error 1006 occurs when the wire is driven low by noise after the termination of the STOP condition 1012. A second category of signaling error 1008 occurs when the wire is driven low by the receiving LM-UART during the STOP condition 1012, and does not return to a high state or remain in the high state after being driven high by the receiving LM-UART.

These signaling errors 1006, 1008 may result in a lock-out condition whereby each of the LM-UARTs is waiting for signaling from the other LM-UART. According to certain aspects, LM-UARTs may be adapted to avoid lock-out conditions by correcting errors in accordance with certain logic rules.

FIG. 11 illustrates a single-wire interface 1100 employing LM-UARTs 1102, 1122 that may be adapted in accordance with certain aspects disclosed herein. In one example, the single-wire interface is derived from, or based on the single-wire interface 300 illustrated in FIG. 3. The single-wire interface 1100 may be included in, or contribute to a full-duplex 2-wire serial data link. The single-wire interface 1100 may be implemented using two LM-UARTs 1102, 1122. A transmitter circuit of the first LM-UART 1102 is coupled to a receiver circuit of a second LM-UART 1122 through a line or wire 1120.

The first LM-UART 1102 includes a line driver 1104 used to transmit data packets over the wire 1120. The output of the line driver may be in a high-impedance state between data transmissions. A line receiver 1106 coupled to the wire 1120 provides a signal that is used to determine the CTS state of the single-wire interface 1100 between data transmissions. The CTS state is used by transmitter control logic 1108 to determine whether the line driver 1104 is to be enabled or placed in high-impedance mode, and to control the operation of transmitter circuits, including shift registers and buffers.

The second LM-UART 1122 includes a line receiver 1124 that receives data transmitted over the wire 1120 by the transmitting LM-UART 1102. Receiver control logic 1128 may initiate the signaling of flow control information between data transmissions. In one example, the receiver control logic 1128 may monitor the occupancy of buffers in receiver circuits and may cause flow control logic 1134 to assert flow control between data transmissions.

In the illustrated example, the LM-UARTs 1102 and 1122 each include a keeper circuit 1110 and 1130 which may be controlled by the transmitter control logic 1108 and the receiver control logic 1128, respectively. In one example, the transmitter control logic 1108 and the receiver control logic 1128 may provide a signal 1112, 1132 to the respective keeper circuits 1110 and 1130 to force a state change on the wire 1120. For example, the transmitter control logic 1108 may signal the keeper circuit 1110 to drive the wire 1120 to a high state when the wire 1120 is in a low state. The keeper circuit 1110 may then be flipped under the control of the transmitter control logic 1108.

The first category of signaling error 1006 illustrated in FIG. 10 may be corrected by a transmitting LM-UART 1102. The receiving LM-UART 1122 may be configured to assert initial flow-control during the interval allocated for a STOP condition 1012. Initial flow-control may comprise the $FC_{ON}$ pulse 850 (see FIG. 8) or an edge 1030 corresponding to the assertion of a flow-control signal. The occurrence of an assertion of initial flow-control after the termination of the STOP condition 1012 may be regarded as an error condition. The transmitting LM-UART 1102 may be configured to identify as an error condition, a falling edge 1026 or a low state that begins after the termination of the STOP condition 1012. The transmitting LM-UART 1102 may correct the error condition by flipping the keeper circuit 1110 such that the wire 1120 assumes a high state. The transmitting LM-UART 1102 may flip the keeper circuit 1110 within one or two cycles of the oversampling clock 440 (see FIG. 4) in order that the erroneous low state is less than the minimum duration for a stop bit expected by the receiving LM-UART 1122. The receiving LM-UART 1122 ignores the erroneous low state as an invalid pulse.

The second category of signaling error 1008 illustrated in FIG. 10 may be corrected by a receiving LM-UART 1122. The receiving LM-UART 1122 may be configured to recognize an error condition when the wire 1120 is in a low state under circumstances where the receiving LM-UART 1122 did not assert flow-control. An erroneous transition 1028 on the wire 1120 caused by noise during the STOP condition 1012 may be corrected by the receiving LM-UART 1122. The receiving LM-UART 1122 may be configured to correct this category of error condition by flipping the keeper circuit 1130 such that the wire 1120 assumes a high state. The receiving LM-UART 1122 may flip the keeper circuit 1130 within one or two cycles of an oversampling clock 440 (see FIG. 4). In one example, the transmitting LM-UART 1102 may see an assertion of flow-control followed rapidly by a de-assertion of flow-control. In another example, the transmitting LM-UART 1102 may detect a pulse that is shorter than the minimum pulse width defined for flow-control signaling illustrated in FIGs. 8 and 9. In either of these example, the transmitting LM-UART 1102 effectively ignores erroneous transitions on the wire 1120 during the STOP condition 1012.

### Examples of Processing Circuits and Methods

LM-UARTs may be configurable to operate in multiple flow-control modes. For example, a LM-UART may be initially configured to operate in a pulse-based flow-control mode, and may be reconfigured to operate in a mode that does not use pulse-based flow-control techniques.

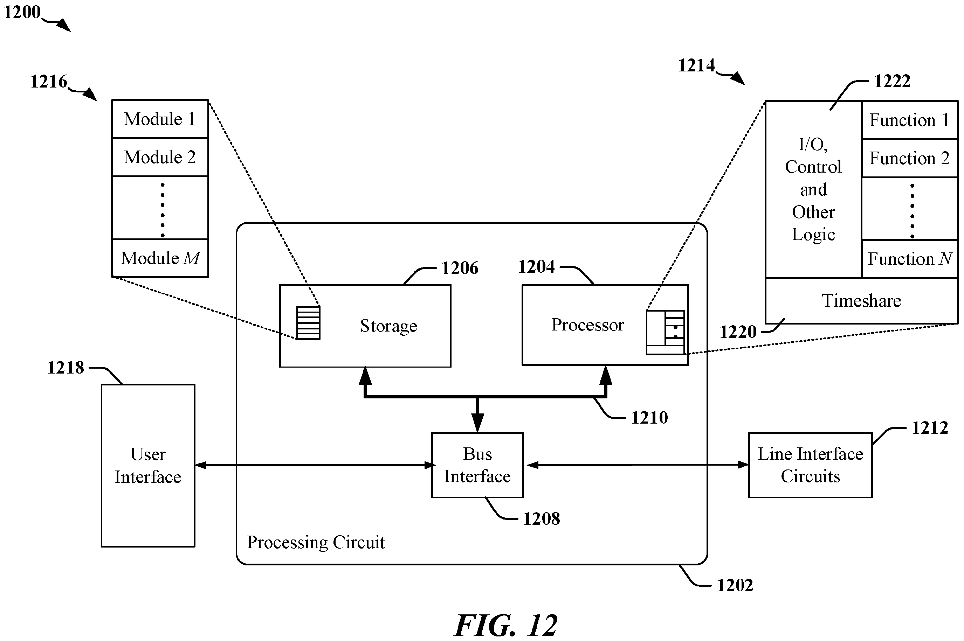

FIG. 12 is a diagram illustrating an example of a hardware implementation for an apparatus 1200 employing a processing circuit 1202 that may be configured to perform one or more functions disclosed herein. In accordance with various aspects of the disclosure, an element, or any portion of an element, or any combination of elements as disclosed herein may be implemented using the processing circuit 1202. The processing circuit 1202 may include one or more processors 1204 that are controlled by some combination of hardware and software modules. Examples of processors 1204 include microprocessors, microcontrollers, digital signal processors (DSPs), SoCs, ASICs, field programmable gate arrays (FPGAs), programmable logic devices (PLDs), state machines, sequencers, gated logic, discrete hardware circuits, and other suitable hardware configured to perform the various functionality described throughout this disclosure. The one or more processors 1204 may include specialized processors that perform specific functions, and that may be configured, augmented or controlled by one of the software modules 1216. The one or more processors 1204 may be configured through a combination of software modules 1216 loaded during initialization, and further configured by loading or unloading one or more software modules 1216 during operation.

In the illustrated example, the processing circuit 1202 may be implemented with a bus architecture, represented generally by the bus 1210. The bus 1210 may include any number of interconnecting buses and bridges depending on the specific application of the processing circuit 1202 and the overall design constraints. The bus 1210 links together various circuits including the one or more processors 1204, and storage 1206. Storage 1206 may include memory devices and mass storage devices, and may be referred to herein as computer-readable media and/or processor-readable media. The bus 1210 may also link various other circuits such as timing sources, timers, peripherals, voltage regulators, and power management circuits. A bus interface 1208 may provide an interface between the bus 1210 and one or more transceivers 1212. A transceiver 1212 may be provided for each networking technology supported by the processing circuit. In some instances, multiple networking technologies may share some or all of the circuitry or processing modules found in a transceiver 1212. Each transceiver 1212 provides a means for communicating with various other apparatus over a transmission medium. Depending upon the nature of the apparatus 1200, a user interface 1218 (e.g., keypad, display, speaker, microphone, joystick) may also be provided, and may be communicatively coupled to the bus 1210 directly or through the bus interface 1208.

A processor 1204 may be responsible for managing the bus 1210 and for general processing that may include the execution of software stored in a computer-readable medium that may include the storage 1206. In this respect, the processing circuit 1202, including the processor 1204, may be used to implement any of the methods, functions and techniques disclosed herein. The storage 1206 may be used for storing data that is manipulated by the processor 1204 when executing software, and the software may be configured to implement any one of the methods disclosed herein.

One or more processors 1204 in the processing circuit 1202 may execute software. Software shall be construed broadly to mean instructions, instruction sets, code, code segments, program code, programs, subprograms, software modules, applications, software applications, software packages, routines, subroutines, objects, executables, threads of execution, procedures, functions, algorithms, etc., whether referred to as software, firmware, middleware, microcode, hardware description language, or otherwise. The software may reside in computer-readable form in the storage 1206 or in an external computer-readable medium. The external computer-readable medium and/or storage 1206 may include a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a "flash drive," a card, a stick, or a key drive), RAM, ROM, a programmable read-only memory (PROM), an erasable PROM (EPROM) including EEPROM, a register, a removable disk, and any other suitable medium for storing software and/or instructions that may be accessed and read by a computer. The computer-readable medium and/or storage 1206 may also include, by way of example, a carrier wave, a transmission line, and any other suitable medium for transmitting software and/or instructions that may be accessed and read by a computer. Computer-readable medium and/or the storage 1206 may reside in the processing circuit 1202, in the processor 1204, external to the processing circuit 1202, or be distributed across multiple entities including the processing circuit 1202. The computer-readable medium and/or storage 1206 may be embodied in a computer program product. By way of example, a computer program product may include a computer-readable medium in packaging materials. Those skilled in the art will recognize how best to implement the described functionality presented throughout this disclosure depending on the particular application and the overall design constraints imposed on the overall system.

The storage 1206 may maintain software maintained and/or organized in loadable code segments, modules, applications, programs, etc., which may be referred to herein as software modules 1216. Each of the software modules 1216 may include instructions and data that, when installed or loaded on the processing circuit 1202 and executed by the one or more processors 1204, contribute to a run-time image 1214 that controls the operation of the one or more processors 1204. When executed, certain instructions may cause the processing circuit 1202 to perform functions in accordance with certain methods, algorithms and processes described herein.

Some of the software modules 1216 may be loaded during initialization of the processing circuit 1202, and these software modules 1216 may configure the processing circuit 1202 to enable performance of the various functions disclosed herein. For example, some software modules 1216 may configure internal devices and/or logic circuits 1222 of the processor 1204, and may manage access to external devices such as the transceiver 1212, the bus interface 1208, the user interface 1218, timers, mathematical coprocessors, and so on. The software modules 1216 may include a control program and/or an operating system that interacts with interrupt handlers and device drivers, and that controls access to various resources provided by the processing circuit 1202. The resources may include memory, processing time, access to the transceiver 1212, the user interface 1218, and so on.

One or more processors 1204 of the processing circuit 1202 may be multifunctional, whereby some of the software modules 1216 are loaded and configured to perform different functions or different instances of the same function. The one or more processors 1204 may additionally be adapted to manage background tasks initiated in response to inputs from the user interface 1218, the transceiver 1212, and device drivers, for example. To support the performance of multiple functions, the one or more processors 1204 may be configured to provide a multitasking environment, whereby each of a plurality of functions is implemented as a set of tasks serviced by the one or more processors 1204 as needed or desired. In one example, the multitasking environment may be implemented using a timesharing program 1220 that passes control of a processor 1204 between different tasks, whereby each task returns control of the one or more processors 1204 to the timesharing program 1220 upon completion of any outstanding operations and/or in response to an input such as an interrupt. When a task has control of the one or more processors 1204, the processing circuit is effectively specialized for the purposes addressed by the function associated with the controlling task. The timesharing program 1220 may include an operating system, a main loop that transfers control on a round-robin basis, a function that allocates control of the one or more processors 1204 in accordance with a prioritization of the functions, and/or an interrupt driven main loop that responds to external events by providing control of the one or more processors 1204 to a handling function.

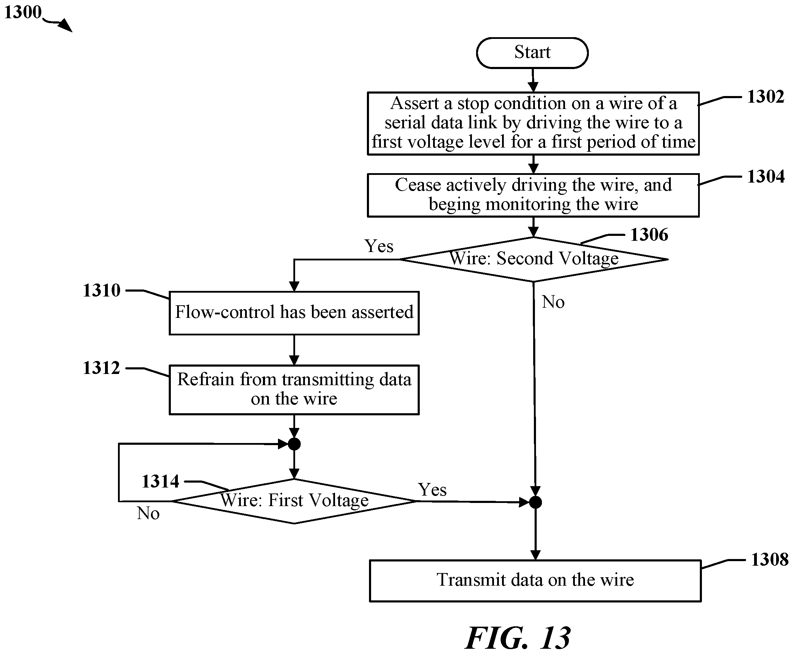

FIG. 13 is a flowchart 1300 of a first method that may be performed at a transmitting LM-UART.

At block 1302, the LM-UART may assert a stop condition on a wire of a serial data link by driving the wire to a first voltage level.

At block 1304, the LM-UART may cease active driving of the wire. The LM-UART may enter a high impedance mode of operation and the wire may be maintained at the first voltage level by a keeper circuit. In some instances, the LM-UART may enter a high impedance mode of operation and the wire may be maintained at the first voltage level by a pull-up or a pull-down resistance. In some examples, the LM-UART may modify an output impedance such that the wire is passively maintained at the first voltage level.

At block 1306, the LM-UART may monitor the wire to determine if the wire has transitioned to a second voltage level during the stop condition.

When at block 1306, the LM-UART determines the wire has not transitioned to the second voltage level during the stop condition, the LM-UART may transmit or continue transmitting data on the wire at block 1308.

When at block 1306, the LM-UART determines the wire has transitioned to the second voltage level during the stop condition, the LM-UART may determine that flow-control has been asserted at lock 1310.

At block 1312, the LM-UART may refrain from transmitting data on the wire while flow-control is asserted.

At block 1314, the LM-UART may wait until the wire has transitioned back to the first voltage level, indicating deassertion of flow control. When the wire has transitioned back to the first voltage level, the LM-UART may transmit or continue transmitting data on the wire at block 1308.

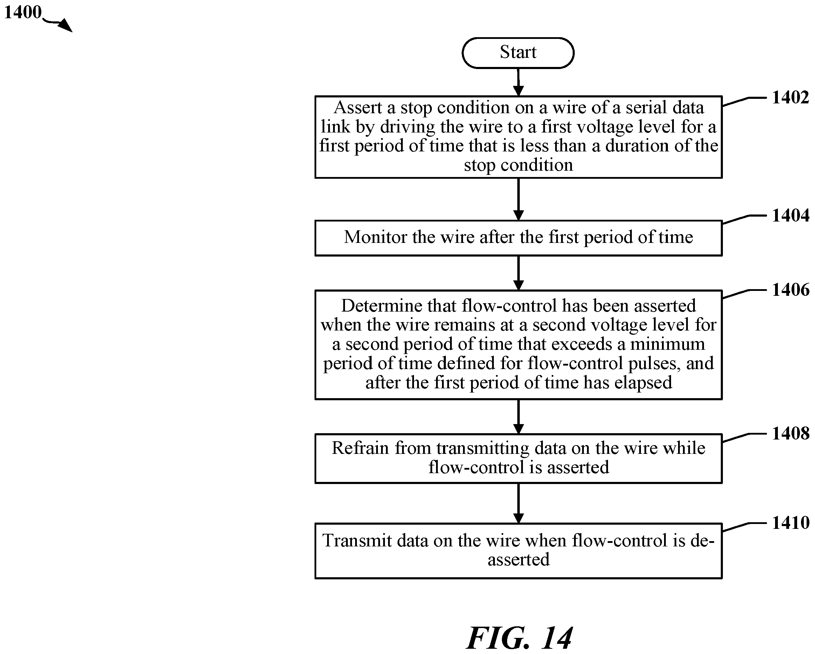

FIG. 14 is a flowchart 1400 of a second method that may be performed at a transmitting LM-UART.

At block 1402, the LM-UART may assert a stop condition on a wire of a serial data link by driving the wire to a first voltage level for a first period of time that is less than a duration of the stop condition.

At block 1404, the LM-UART may monitor the wire after the first period of time.

At block 1406, the LM-UART may determine that flow-control has been asserted when the wire remains at a second voltage level for a second period of time that exceeds a minimum period of time defined for flow-control pulses, and after the first period of time has elapsed.

At block 1408, the LM-UART may refrain from transmitting data on the wire while flow-control is asserted.

At block 1410, the LM-UART may transmit data on the wire when flow-control is de-asserted.

In some examples, the wire is returned to the first voltage level after expiration of the second period of time. The LM-UART may determine that flow-control is de-asserted when the wire remains at the second voltage level for a third period of time that begins after the wire has returned to the first voltage level upon expiration of the second period of time, and when the third period of time exceeds the minimum period of time defined for flow-control pulses. The LM-UART may calculate a fourth period of time based on duration of the second period of time, and determine that flow-control is de-asserted after the fourth period of time has elapsed.

In some examples, flow-control is determined to have been asserted when the wire transitions to the second voltage level within the duration of the stop condition.

In some examples, the LM-UART may determine an error condition when a transition of the wire to the second voltage level occurs after the stop condition has been terminated, and drive the wire to the first voltage level when the error condition is determined. The wire may be driven to the first voltage level when the error condition is determined by flipping a keeper circuit.

In one example, the LM-UART may override flow-control by actively driving the wire after a period corresponding to a transmission time for a datagram has elapsed. The datagram may carry an 8-bit data byte, a 16-bit data word or some other number of bits with or without framing and control bits.

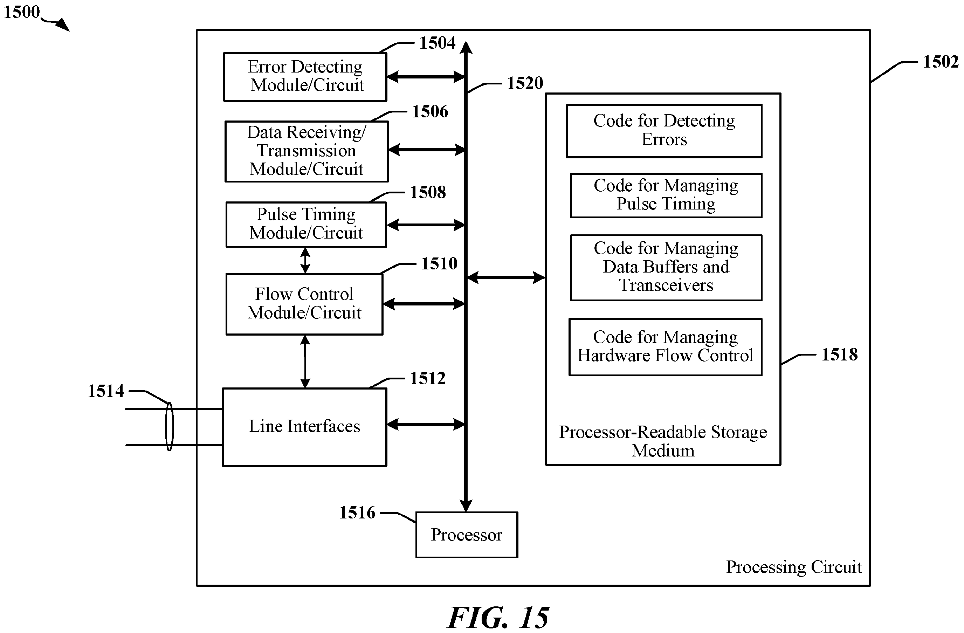

FIG. 15 is a diagram illustrating a simplified example of a hardware implementation for an apparatus 1500 employing a processing circuit 1502. The apparatus may implement a bridging circuit in accordance with certain aspects disclosed herein. The processing circuit typically has a controller or processor 1516 that may include one or more microprocessors, microcontrollers, digital signal processors, sequencers and/or state machines. The processing circuit 1502 may be implemented with a bus architecture, represented generally by the bus 1520. The bus 1520 may include any number of interconnecting buses and bridges depending on the specific application of the processing circuit 1502 and the overall design constraints. The bus 1520 links together various circuits including one or more processors and/or hardware modules, represented by the controller or processor 1516, the modules or circuits 1504, 1506, 1508 and 1510, and the computer-readable storage medium 1518. The apparatus may have a plurality of multi-wire interfaces 1512 adapted for full-duplex serial communication with flow control using a variable number of wires 1514 per interface 1512.

The bus 1520 may also link various other circuits such as timing sources, peripherals, voltage regulators, and power management circuits, which are well known in the art, and therefore, will not be described any further.

The processor 1516 is responsible for general processing, including the execution of software, code and/or instructions stored on the computer-readable storage medium 1518. The computer-readable storage medium may include a non-transitory storage medium. The software, when executed by the processor 1516, causes the processing circuit 1502 to perform the various functions described *supra* for any particular apparatus. The computer-readable storage medium may be used for storing data that is manipulated by the processor 1516 when executing software. The processing circuit 1502 further includes at least one of the modules 1504, 1506, 1508 and 1510. The modules 1504, 1506, 1508 and 1510 may be software modules running in the processor 1516, resident/stored in the computer-readable storage medium 1518, one or more hardware modules coupled to the processor 1516, or some combination thereof. The modules 1504, 1506, 1508 and 1510 may include microcontroller instructions, state machine configuration parameters, or some combination thereof.

In one configuration, the apparatus 1500 includes modules and/or circuits 1506, 1508 configured to assert a stop condition one of the wires 1514 of a serial data link, modules and/or circuits 1504, 1506, 1508, 1510 configured to monitor the wire after the first period of time, modules and/or circuits 1506, 1510 configured to determine that flow-control has been asserted, and modules and/or circuits 1506 configured to transmit data on the wire when flow-control is de-asserted. The apparatus 1500 may be configurable to transmit data packets when the serial data link is operated synchronously. The apparatus 1500 may be configurable to transmit data packets when the serial data link is operated asynchronously.

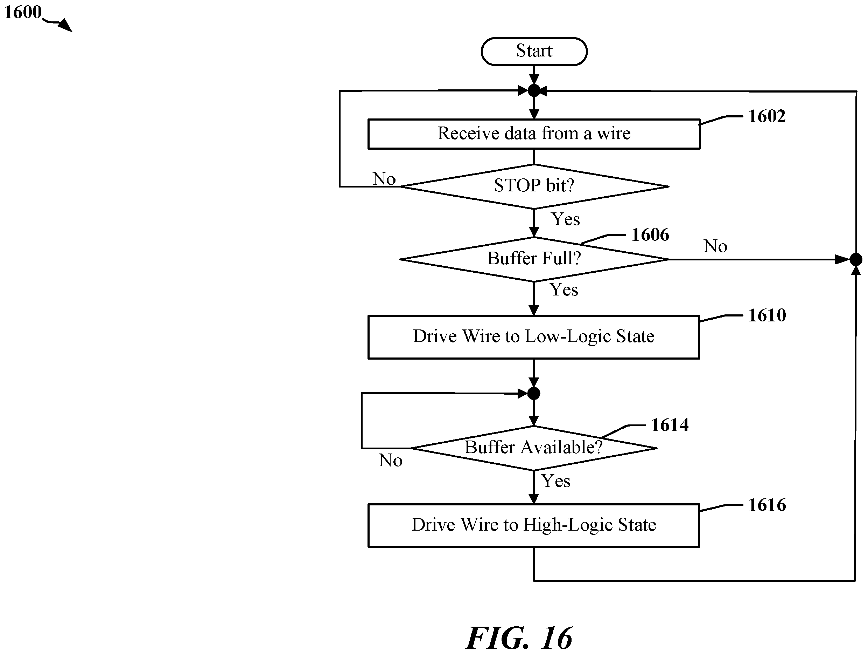

FIG. 16 is a flowchart 1600 of a first method that may be performed at a receiving LM-UART.

At block 1602, the LM-UART may receive serial data from a wire. The LM-UART may receive bits of data into a serial-to parallel converter, where the end of a frame may be indicated by a STOP bit.

At block 1604, the LM-UART may determine whether a STOP BIT has been received. If the STOP BIT has not been received, the LM-UART continues to receive bits of serial data from the wire at block 1602. If the STOP BIT has been received, the LM-UART continues at block 1606.

At block 1606, the LM-UART may determine whether a buffer that receives the serial data or parallel data is full, or has exceeded a threshold occupancy level. If the LM-UART determines that the buffer is not full, the LM-UART continues to receive serial data from the wire at block 1602. If the LM-UART determines that the buffer is full, the LM-UART continues at block 1610.

At block 1610, the LM-UART may assert flow-control for the serial data link by driving the wire to a low logic state (where the STOP bit is represented as a high logic state).

At block 1612, the LM-UART may wait for the buffer to empty or have sufficient space to continue receiving data. When the buffer can receive more data, the LM-UART may de-assert the flow-control at block 1616 by driving the wire to the high logic state. The LM-UART may then resume receiving serial data from the wire at block 1602.

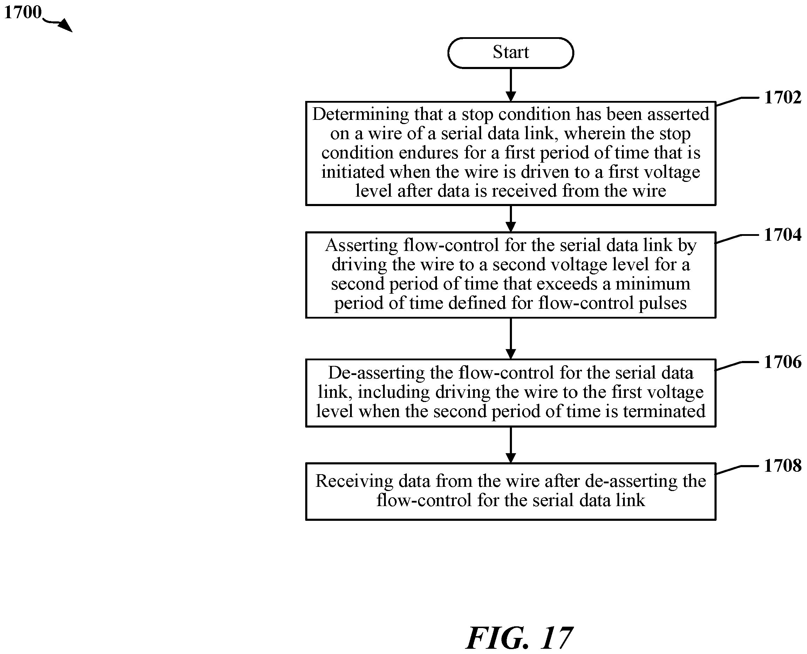

FIG. 17 is a flowchart 1700 of a second method that may be performed at a receiving LM-UART.

At block 1702, the LM-UART may determine that a stop condition has been asserted on a wire of a serial data link. The stop condition may endure for a first period of time that is initiated when the wire is driven to a first voltage level after data is received from the wire.

At block 1704, the LM-UART may assert flow-control for the serial data link by driving the wire to a second voltage level for a second period of time that exceeds a minimum period of time defined for flow-control pulses.

At block 1706, the LM-UART may de-assert the flow-control for the serial data link, including driving the wire to the first voltage level when the second period of time is terminated. De-asserting the flow-control for the serial data link may include transmitting a pulse on the wire after the second period of time has elapsed. The pulse may have a duration that exceeds a minimum period of time defined for flow-control pulses.

At block 1708, the LM-UART may receive data from the wire after de-asserting the flow-control for the serial data link.

In some examples, the LM-UART may select a third period of time during which the flow-control for the serial data link is to be asserted, and calculate the second period of time based on a duration of the third period of time.

In some examples, the LM-UART may refrain from asserting flow-control for the serial data link when the first period of time has expired. The LM-UART may determine that flow-control for the serial data link is not to be asserted, determine an error condition when a transition of the wire to the second voltage level occurs the first period of time after determining that flow-control for the serial data link is not to be asserted, and drive the wire to the first voltage level when the error condition is determined. The wire may be driven to the first voltage level when the error condition is determined by flipping a keeper circuit.

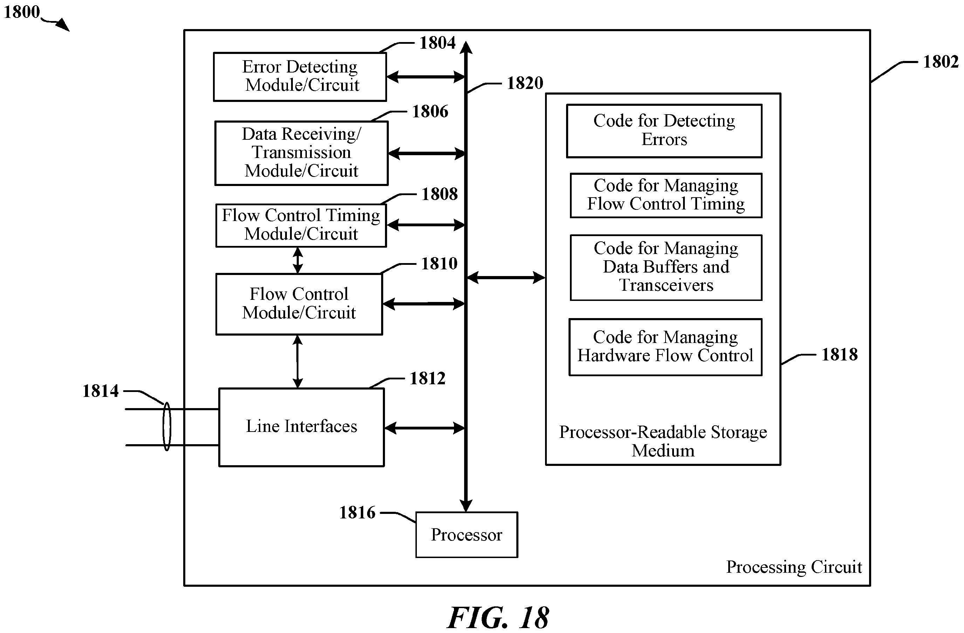

FIG. 18 is a diagram illustrating a simplified example of a hardware implementation for an apparatus 1800 employing a processing circuit 1802. The apparatus may implement a bridging circuit in accordance with certain aspects disclosed herein. The processing circuit typically has a controller or processor 1816 that may include one or more microprocessors, microcontrollers, digital signal processors, sequencers and/or state machines. The processing circuit 1802 may be implemented with a bus architecture, represented generally by the bus 1820. The bus 1820 may include any number of interconnecting buses and bridges depending on the specific application of the processing circuit 1802 and the overall design constraints. The bus 1820 links together various circuits including one or more processors and/or hardware modules, represented by the controller or processor 1816, the modules or circuits 1804, 1806, 1808 and 1810 and the computer-readable storage medium 1818. The apparatus may have a plurality of multi-wire interfaces 1812 adapted for full-duplex serial communication with flow control using a variable number of wires 1814 per interface 1812. The bus 1820 may also link various other circuits such as timing sources, peripherals, voltage regulators, and power management circuits, which are well known in the art, and therefore, will not be described any further.

The processor 1816 is responsible for general processing, including the execution of software, code and/or instructions stored on the computer-readable storage medium 1818. The computer-readable storage medium may include a non-transitory storage medium. The software, when executed by the processor 1816, causes the processing circuit 1802 to perform the various functions described *supra* for any particular apparatus. The computer-readable storage medium may be used for storing data that is manipulated by the processor 1816 when executing software. The processing circuit 1802 further includes at least one of the modules 1804, 1806, 1808 and 1810. The modules 1804, 1806, 1808 and 1810 may be software modules running in the processor 1816, resident/stored in the computer-readable storage medium 1818, one or more hardware modules coupled to the processor 1816, or some combination thereof. The modules 1804, 1806, 1808 and 1810 may include microcontroller instructions, state machine configuration parameters, or some combination thereof.

In one configuration, the apparatus 1800 includes modules and/or circuits 1806, 1808 determine when a stop condition is asserted on one of the wires 1814 of a serial data link, modules and/or circuits 1810 configured to assert flow-control on the wire, and modules and/or circuits 1806 configured to receive data from the wire when flow-control is de-asserted. The apparatus 1800 may be configurable to receive data when the serial data link is operated synchronously. The apparatus 1800 may be configurable to receive data when the serial data link is operated asynchronously.

It is understood that the specific order or hierarchy of steps in the processes disclosed is an illustration of exemplary approaches. Based upon design preferences, it is understood that the specific order or hierarchy of steps in the processes may be rearranged. Further, some steps may be combined or omitted. The accompanying method claims present elements of the various steps in a sample order, and are not meant to be limited to the specific order or hierarchy presented.

**Claims**

**1.**    A method (1400) performed at a transmitting device, comprising:

asserting a stop condition on a wire (1120) of a serial data link by driving the wire (1120) to a first voltage level for a first period of time that is less than a duration of the stop condition (1402);
monitoring the wire (1120) after the first period of time (1404);
determining that flow-control has been asserted when the wire (1120) remains at a second voltage level for a second period of time that exceeds a minimum period of time defined for flow-control pulses, and after the first period of time has elapsed (1406);
refraining from transmitting data on the wire (1120) while the flow-control is asserted (1408); and
transmitting data on the wire (1120) when the flow-control is de-asserted (1410).

**2.**    The method of claim 1, wherein the wire (1120) is returned to the first voltage level after expiration of the second period of time, further comprising:
determining that the flow-control is de-asserted when the wire (1120) remains at the second voltage level for a third period of time that begins after the wire (1120) has returned to the first voltage level upon expiration of the second period of time, and when the third period of time exceeds the minimum period of time defined for the flow-control pulses.

**3.**    The method of claim 1, wherein the wire (1120) is returned to the first voltage level after expiration of the second period of time, further comprising:

calculating a fourth period of time based on a duration of the second period of time; and
determining that the flow-control is de-asserted after the fourth period of time has elapsed.

**4.**    The method of claim 1, wherein the flow-control is determined to have been asserted when the wire (1120) transitions to the second voltage level within the duration of the stop condition.

**5.** The method of claim 4, further comprising:

determining an error condition when a transition of the wire (1120) to the second voltage level occurs after the stop condition has been terminated; and

driving the wire (1120) to the first voltage level when the error condition is determined.

**6.** The method of claim 5, wherein driving the wire (1120) to the first voltage level when the error condition is determined comprises:

flipping a keeper circuit (1110).

**7.** The method of claim 1, further comprising:

overriding the flow-control by actively driving the wire (1120) after a period corresponding to a transmission time for a datagram has elapsed.

**8.** A transmitting apparatus, comprising:

a line driver (1104) coupled to a wire (1120) of a serial data link and configured to:

transmit a data packet over the wire (1120); and

provide a stop condition(1012) after transmitting the data packet by driving the wire (1120) to a first voltage level for a first period of time that is less than a duration of the stop condition; and

a flow-control circuit (1810) configured to:

monitor the wire after the first period of time has elapsed; and

determine that flow-control has been asserted when the wire (1120) remains at a second voltage level for a second period of time that exceeds a minimum period of time defined for flow-control pulses after the first period of time has elapsed,

wherein the line driver (1104) is further configured to:

refrain from transmitting data on the wire while the flow-control is asserted; and

transmit data on the wire when the flow-control is de-asserted.

**9.** The transmitting apparatus of claim 8, wherein the apparatus is configurable to transmit data packets when the serial data link is operated synchronously (1500).

**10.** A method performed at a receiving device, comprising:

determining that a stop condition (1012) has been asserted on a wire (1120) of a serial data link, wherein the stop condition endures for a first period of time that is initiated when the wire (1120) is driven to a first voltage level after data is received from the wire (1120);

asserting flow-control for the serial data link by driving the wire (1120) to a second voltage level for a second period of time that exceeds a minimum period of time defined for flow-control pulses;

de-asserting the flow-control for the serial data link, including driving the wire (1120) to the first voltage level when the second period of time is terminated; and

receiving data from the wire (1120) after de-asserting the flow-control for the serial data link.

**11.** The method of claim 10, wherein de-asserting the flow-control for the serial data link comprises:

transmitting a pulse on the wire (1120) after the second period of time has elapsed, wherein the pulse has a duration that exceeds the minimum period of time defined for the flow-control pulses.

**12.** The method of claim 10, further comprising:

selecting a third period of time during which the flow-control for the serial data link is to be asserted; and

calculating the second period of time based on a duration of the third period of time.

**13.** The method of claim 10, further comprising:

refraining from asserting the flow-control for the serial data link when the first period of time has expired.

14. The method of claim 10, further comprising:

determining that the flow-control for the serial data link is not to be asserted;
determining an error condition when a transition of the wire to the second voltage level occurs during the first period of time after determining that the flow-control for the serial data link is not to be asserted; and
driving the wire (1120) to the first voltage level when the error condition is determined, and optionally, wherein driving the wire to the first voltage level when the error condition is determined comprises:
flipping a keeper circuit(1110).

15. A receiving apparatus (1500), comprising:

means for determining that a stop condition (1012) has been asserted on a wire of a serial data link, wherein the stop condition (1012) endures for a first period of time that is initiated when the wire is driven to a first voltage level after data is received from the wire (1120);
means for providing flow-control signaling configured to:

assert flow-control for the serial data link by driving the wire to a second voltage level for a second period of time that exceeds a minimum period of time defined for flow-control pulses; and
de-assert the flow-control for the serial data link, including driving the wire (1120) to the first voltage level when the second period of time is terminated; and

means for receiving data from the wire (1120) after the flow-control is de-asserted for the serial data link.

## Patentansprüche

1. Ein Verfahren (1400), das an einer Sendevorrichtung durchgeführt wird, aufweisend:

Aktivieren (1402) einer Stoppbedingung an einem Draht (1120) einer seriellen Datenverbindung durch das Treiben des Drahts (1120) zu einem ersten Spannungspegel für eine erste Zeitperiode, die kürzer ist als die Dauer der Stoppbedingung,
Überwachen (1404) des Drahts (1120) nach der ersten Zeitperiode,
Bestimmen (1406), dass eine Flusssteuerung aktiviert wurde, wenn der Draht (1120) bei einem zweiten Spannungspegel für eine zweite Zeitperiode bleibt, die eine für Flusssteuerpulse definierte minimale Zeitperiode überschreitet, und nachdem die erste Zeitperiode abgelaufen ist,
Unterbinden (1408) des Sendens von Daten auf dem Draht (1120), während die Flusssteuerung aktiviert ist, und
Senden (1410) von Daten auf dem Draht (1120), wenn die Flusssteuerung deaktiviert ist.

2. Verfahren nach Anspruch 1, wobei der Draht (1120) nach Ablauf der zweiten Zeitperiode zu dem ersten Spannungspegel zurückgeführt wird, wobei das Verfahren weiterhin aufweist:
Bestimmen dass die Flusssteuerung deaktiviert ist, wenn der Draht (1120) bei dem zweiten Spannungspegel für eine dritte Zeitperiode bleibt, die beginnt, nachdem der Draht (1120) nach Ablauf der zweiten Zeitperiode zu dem ersten Spannungspegel zurückgekehrt ist, und wenn die dritte Zeitperiode die für die Flusssteuerpulse definierte minimale Zeitperiode überschreitet.

3. Verfahren nach Anspruch 1, wobei der Draht (1120) nach Ablauf der zweiten Zeitperiode zu dem ersten Spannungspegel zurückgeführt wird, wobei das Verfahren weiterhin aufweist:

Berechnen einer vierten Zeitperiode basierend auf der Dauer der zweiten Zeitperiode, und
Bestimmen, dass die Flusssteuerung deaktiviert ist, nachdem die vierte Zeitperiode abgelaufen ist.

4. Verfahren nach Anspruch 1, wobei die Flusssteuerung als aktiviert bestimmt wird, wenn der Draht (1120) zu dem zweiten Spannungspegel während der Dauer der Stoppbedingung übergeht.

5. Verfahren nach Anspruch 4, das weiterhin aufweist:

Bestimmen einer Fehlerbedingung, wenn ein Übergang des Drahts (1120) zu dem zweiten Spannungspegel auftritt, nachdem die Stoppbedingung beendet wurde, und

Treiben des Drahts (1120) zu dem ersten Spannungspegel, wenn die Fehlerbedingung bestimmt wird.

6.  Verfahren nach Anspruch 5, wobei das Treiben des Drahts (1120) zu dem ersten Spanungspegel, wenn die Fehlerbedingung bestimmt wird, aufweist:
Schalten einer Halteschaltung (1110).

7.  Verfahren nach Anspruch 1, das weiterhin aufweist:
Übergehen der Flusssteuerung durch das aktive Treiben des Drahts (1120) nach Ablauf einer Periode in Entsprechung zu einer Übergangszeit für ein Datagramm.

8.  Eine Sendevorrichtung, aufweisend:

einen Leitungstreiber (1104), der mit einem Draht (1120) einer seriellen Datenverbindung gekoppelt ist und konfiguriert ist zum:

Senden eines Datenpakets über den Draht (1120), und
Vorsehen einer Stoppbedingung (1012) nach dem Senden des Datenpakets durch das Treiben des Drahts (1120) zu einem ersten Spannungspegel für eine erste Zeitperiode, die kleiner als die Dauer der Stoppbedingung ist, und

eine Flusssteuerschaltung (1810), die konfiguriert ist zum:

Überwachen des Drahts nach Ablauf der ersten Zeitperiode, und
Bestimmen, dass eine Flusssteuerung aktiviert wurde, wenn der Draht (1120) bei dem zweiten Spannungspegel für eine zweite Zeitperiode, die eine für Flusssteuerpulse definierte minimale Zeitperiode überschreitet, nach Ablauf der ersten Zeitperiode bleibt, wobei der Leitungstreiber (1104) weiterhin konfiguriert ist zum:

Unterbinden des Sendens von Daten auf dem Draht, während die Flusssteuerung aktiviert ist, und
Senden von Daten auf dem Draht, wenn die Flusssteuerung deaktiviert ist.

9.  Sendevorrichtung nach Anspruch 8, wobei die Vorrichtung konfigurierbar ist zum Senden von Datenpaketen, wenn die serielle Datenverbindung synchron betrieben wird (1500).

10.  Ein Verfahren, das an einer Empfangsvorrichtung durchgeführt wird, aufweisend:

Bestimmen, dass eine Stoppbedingung (1012) an einem Draht (1120) einer seriellen Datenverbindung aktiviert wurde, wobei die Stoppbedingung für eine erste Zeitperiode andauert, die eingeleitet wird, wenn der Draht (1120) zu einem ersten Spannungspegel getrieben wird, nachdem Daten von dem Draht (1120) empfangen wurden,
Aktivieren einer Flusssteuerung für die serielle Datenverbindung durch das Treiben des Drahts (1120) zu einem zweiten Spannungspegel für eine zweite Zeitperiode, die eine für Flusssteuerpulse definierte minimale Zeitperiode überschreitet,
Deaktivieren der Flusssteuerung für die serielle Datenverbindung einschließlich des Treibens des Drahts (1120) zu dem ersten Spannungspegel, wenn die zweite Zeitperiode beendet wird, und
Empfangen von Daten von dem Draht (1120) nach dem Deaktivieren der Flusssteuerung für die serielle Datenverbindung.

11.  Verfahren nach Anspruch 10, wobei das Deaktivieren der Flusssteuerung für die serielle Datenverbindung aufweist:
Senden eines Pulses auf dem Draht (1120) nach Ablauf der zweiten Zeitperiode, wobei der Puls eine Dauer aufweist, die die für die Flusssteuerpulse definierte minimale Zeitperiode überschreitet.

12.  Verfahren nach Anspruch 10, das weiterhin aufweist:

Auswählen einer dritten Zeitperiode, während welcher die Flusssteuerung für die serielle Datenverbindung zu aktivieren ist, und
Berechnen der zweiten Zeitperiode basierend auf der Dauer der dritten Zeitperiode.

**13.** Verfahren nach Anspruch 10, das weiterhin aufweist:
Unterbinden des Aktivierens der Flusssteuerung für die serielle Datenverbindung, wenn die erste Zeitperiode abgelaufen ist.

**14.** Verfahren nach Anspruch 10, das weiterhin aufweist:

Bestimmen, dass die Flusssteuerung für die serielle Datenverbindung nicht zu aktivieren ist,
Bestimmen einer Fehlerbedingung, wenn ein Übergang des Drahts zu dem zweiten Spannungspegel während der ersten Zeitperiode auftritt, nachdem bestimmt wurde, dass die Flusssteuerung für die serielle Datenverbindung nicht zu aktivieren ist, und
Treiben des Drahts (1120) zu dem ersten Spannungspegel, wenn die Fehlerbedingung bestimmt wird, wobei das Treiben des Drahts zu dem ersten Spannungspegel, wenn die Fehlerbedingung bestimmt wird, optional aufweist:
Schalten einer Halteschaltung (1110).

**15.** Eine Empfangsvorrichtung (1500), aufweisend:

Mittel zum Bestimmen, dass eine Stoppbedingung (1102) an einem Draht einer seriellen Datenverbindung aktiviert wurde, wobei die Stoppbedingung (1012) für eine erste Zeitdauer andauert, die eingeleitet wird, wenn der Draht zu dem ersten Spannungspegel getrieben wird, nachdem Daten von dem Draht (1120) empfangen wurden,
Mittel zum Vorsehen einer Flusssteuersignalisierung, die konfiguriert sind zum:

Aktivieren einer Flusssteuerung für die serielle Datenverbindung durch das Treiben des Drahts zu einem zweiten Spannungspegel für eine zweite Zeitperiode, die eine für Flusssteuerpulse definierte minimale Zeitperiode überschreitet, und
Deaktivieren der Flusssteuerung für die serielle Datenverbindung einschließlich des Treibens des Drahts (1120) zu dem ersten Spannungspegel, wenn die zweite Zeitperiode beendet wird, und

Mittel zum Empfangen von Daten von dem Draht (1120), nachdem die Flusssteuerung für die serielle Datenverbindung deaktiviert wurde.

**Revendications**

**1.** Procédé (1400) mis en oeuvre au niveau d'un dispositif de transmission, comprenant les étapes ci-dessous consistant à :

affirmer une condition d'arrêt sur un fil (1120) d'une liaison de données en série en commandant le fil (1120) jusqu'à un premier niveau de tension pendant une première période de temps qui est inférieure à une durée de la condition d'arrêt (1402) ;
surveiller le fil (1120) à l'issue de la première période de temps (1404) ;
déterminer qu'une commande de flux a été affirmée lorsque le fil (1120) reste à un second niveau de tension pendant une deuxième période de temps qui dépasse une période de temps minimale définie pour des impulsions de commande de flux, et après que la première période de temps s'est écoulée (1406) ;
s'abstenir de transmettre des données sur le fil (1120) tandis que la commande de flux est affirmée (1408) ; et
transmettre des données sur le fil (1120) lorsque la commande de flux est désafirmée (1410).

**2.** Procédé selon la revendication 1, dans lequel le fil (1120) est ramené au premier niveau de tension suite à l'expiration de la deuxième période de temps, comprenant en outre les étapes ci-dessous consistant à :
déterminer que la commande de flux est désaffirmée lorsque le fil (1120) reste au second niveau de tension pendant une troisième période de temps qui commence après que le fil (1120) est revenu au premier niveau de tension suite à l'expiration de la deuxième période de temps, et lorsque la troisième période de temps dépasse la période de temps minimale définie pour les impulsions de commande de flux.

**3.** Procédé selon la revendication 1, dans lequel le fil (1120) est ramené au premier niveau de tension suite à l'expiration de la deuxième période de temps, comprenant en outre les étapes ci-dessous consistant à :

calculer une quatrième période de temps sur la base d'une durée de la deuxième période de temps ; et déterminer que la commande de flux est désaffirmée après que la quatrième période de temps s'est écoulée.

4. Procédé selon la revendication 1, dans lequel il est déterminé que la commande de flux a été affirmée lorsque le fil (1120) passe au second niveau de tension pendant la durée de la condition d'arrêt.

5. Procédé selon la revendication 4, comprenant en outre les étapes ci-dessous consistant à :

déterminer une condition d'erreur lorsqu'une transition du fil (1120) vers le second niveau de tension se produit après que la condition d'arrêt a pris fin ; et
commander le fil (1120) jusqu'au premier niveau de tension lorsque la condition d'erreur est déterminée.

6. Procédé selon la revendication 5, dans lequel l'étape consistant à commander le fil (1120) jusqu'au premier niveau de tension lorsque la condition d'erreur est déterminée comprend l'étape ci-dessous consistant à :
basculer un circuit de maintien (1110).

7. Procédé selon la revendication 1, comprenant en outre l'étape ci-dessous consistant à :
passer outre la commande de flux en commandant activement le fil (1120) après qu'une période correspondant à un temps de transmission d'un datagramme s'est écoulée.

8. Appareil de transmission, comprenant :

une unité de commande de ligne (1104) couplée à un fil (1120) d'une liaison de données en série et configurée de manière à :

transmettre un paquet de données sur le fil (1120) ; et
fournir une condition d'arrêt (1012) suite à la transmission du paquet de données, en commandant le fil (1120) jusqu'à un premier niveau de tension pendant une première période de temps qui est inférieure à une durée de la condition d'arrêt ; et

un circuit de commande de flux (1810) configuré de manière à :

surveiller le fil à l'issue de la première période de temps ; et
déterminer qu'une commande de flux a été affirmée lorsque le fil (1120) reste à un second niveau de tension pendant une deuxième période de temps qui dépasse une période de temps minimale définie pour des impulsions de commande de flux, après que la première période de temps s'est écoulée ;

dans lequel l'unité de commande de ligne (1104) est en outre configurée de manière à :

s'abstenir de transmettre des données sur le fil tandis que la commande de flux est affirmée ; et
transmettre des données sur le fil lorsque la commande de flux est désafirmée.

9. Appareil de transmission selon la revendication 8, dans lequel l'appareil peut être configuré de manière à transmettre des paquets de données lorsque la liaison de données en série est exploitée de manière synchrone (1500).

10. Procédé mis en oeuvre au niveau d'un dispositif de réception, comprenant les étapes ci-dessous consistant à :

déterminer qu'une condition d'arrêt (1012) a été affirmée sur un fil (1120) d'une liaison de données en série, dans lequel la condition d'arrêt dure pendant une première période de temps qui est initiée lorsque le fil (1120) est commandé jusqu'à un premier niveau de tension suite à la réception de données en provenance du fil (1120) ;
affirmer une commande de flux pour la liaison de données en série, en commandant le fil (1120) jusqu'à un second niveau de tension pendant une deuxième période de temps qui dépasse une période de temps minimale définie pour des impulsions de commande de flux ;
désaffirmer la commande de flux pour la liaison de données en série, et notamment commander le fil (1120) jusqu'au premier niveau de tension lorsque la deuxième période de temps a pris fin ; et
recevoir des données en provenance du fil (1120) à l'issue de la désaffirmation de la commande de flux pour la liaison de données en série.

**11.** Procédé selon la revendication 10, dans lequel l'étape de désaffirmation de la commande de flux pour la liaison de données en série comprend l'étape ci-dessous consistant à :
transmettre une impulsion sur le fil (1120) après que la deuxième période de temps s'est écoulée, dans lequel l'impulsion présente une durée qui dépasse la période de temps minimale définie pour les impulsions de commande de flux.

**12.** Procédé selon la revendication 10, comprenant en outre les étapes ci-dessous consistant à :

sélectionner une troisième période de temps au cours de laquelle la commande de flux pour la liaison de données en série doit être affirmée ; et
calculer la deuxième période de temps sur la base d'une durée de la troisième période de temps.

**13.** Procédé selon la revendication 10, comprenant en outre l'étape ci-dessous consistant à :
s'abstenir d'affirmer la commande de flux pour la liaison de données en série lorsque la première période de temps s'est écoulée.

**14.** Procédé selon la revendication 10, comprenant en outre les étapes ci-dessous consistant à :

déterminer que la commande de flux pour la liaison de données en série ne doit pas être affirmée ;
déterminer une condition d'erreur lorsqu'une transition du fil au second niveau de tension se produit au cours de la première période de temps, suite à une détermination selon laquelle la commande de flux pour la liaison de données en série ne doit pas être affirmée ; et
commander le fil (1120) jusqu'au premier niveau de tension lorsque la condition d'erreur est déterminée, et facultativement, dans lequel l'étape de commande du fil jusqu'au premier niveau de tension lorsque la condition d'erreur est déterminée comprend l'étape ci-dessous consistant à :
basculer un circuit de maintien (1110).

**15.** Appareil de réception (1500), comprenant :

un moyen pour déterminer qu'une condition d'arrêt (1012) a été affirmée sur un fil d'une liaison de données en série, dans lequel la condition d'arrêt (1012) dure pendant une première période de temps qui est initiée lorsque le fil est commandé jusqu'à un premier niveau de tension après que des données ont été reçues en provenance du fil (1120) ;
un moyen pour fournir une signalisation de commande de flux configurée de manière à :

affirmer la commande de flux pour la liaison de données en série en commandant le fil jusqu'à un second niveau de tension pendant une deuxième période de temps qui dépasse une période de temps minimale définie pour des impulsions de commande de flux ; et
désaffirmer la commande de flux pour la liaison de données en série, et notamment commander le fil (1120) jusqu'au premier niveau de tension lorsque la deuxième période de temps a pris fin ; et

un moyen pour recevoir des données en provenance du fil (1120) après que la commande de flux a été désaffirmée pour la liaison de données en série.

**FIG. 1**

**200**

**202**

Tx    **(206a)**    Rx

Rx    **(206b)**    Tx

RTS    **(208a)**    CTS

CTS    **(208b)**    RTS

**204**

Device 1 HS-UART

Device 2 HS-UART

**220**

**222**

**228** — Tx_Buffer & Tx Flow Control

**230** — Rx_Buffer & Rx Flow Control

Tx    **(226a)**    Rx

Rx    **(226b)**    Tx

Rx_Buffer & Rx Flow Control — **232**

Tx_Buffer & Tx Flow Control — **234**

**224**

Device 3 LM-UART

Device 4 LM-UART

*FIG. 2*

*FIG. 3*

EP 3 423 950 B1

**FIG. 4**

EP 3 423 950 B1

*FIG. 5*

**FIG. 6**

**FIG. 7**

EP 3 423 950 B1

*FIG. 8*

*FIG. 9*

EP 3 423 950 B1

*FIG. 10*

*FIG. 11*

**FIG. 12**

FIG. 13

Start

Assert a stop condition on a wire of a serial data link by driving the wire to a first voltage level for a first period of time that is less than a duration of the stop condition — 1402

Monitor the wire after the first period of time — 1404

Determine that flow-control has been asserted when the wire remains at a second voltage level for a second period of time that exceeds a minimum period of time defined for flow-control pulses, and after the first period of time has elapsed — 1406

Refrain from transmitting data on the wire while flow-control is asserted — 1408

Transmit data on the wire when flow-control is de-asserted — 1410

*FIG. 14*

EP 3 423 950 B1

**FIG. 15**

EP 3 423 950 B1

**FIG. 16**

EP 3 423 950 B1

1700 ⟍➤

```
          ┌─────────────┐
          │    Start    │
          └──────┬──────┘
                 │
                 ▼
```

Determining that a stop condition has been asserted on a wire of a serial data link, wherein the stop condition endures for a first period of time that is initiated when the wire is driven to a first voltage level after data is received from the wire ⟍ 1702

Asserting flow-control for the serial data link by driving the wire to a second voltage level for a second period of time that exceeds a minimum period of time defined for flow-control pulses ⟍ 1704

De-asserting the flow-control for the serial data link, including driving the wire to the first voltage level when the second period of time is terminated ⟍ 1706

Receiving data from the wire after de-asserting the flow-control for the serial data link ⟍ 1708

*FIG. 17*

EP 3 423 950 B1

**FIG. 18**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7260660 B1